(19) **Europäisches Patentamt / European Patent Office / Office européen des brevets**

(11) **EP 1 917 345 B1**

(12) **FASCICULE DE BREVET EUROPEEN**

(45) Date de publication et mention
de la délivrance du brevet:
**01.01.2014 Bulletin 2014/01**

(21) Numéro de dépôt: **06779014.7**

(22) Date de dépôt: **04.07.2006**

(51) Int Cl.:
**C12H 1/056** *(2006.01)*

(86) Numéro de dépôt international:
**PCT/FR2006/050674**

(87) Numéro de publication internationale:
**WO 2007/003863 (11.01.2007 Gazette 2007/02)**

(54) **UTILISATION D'EXTRAIT DE BIOMASSE FONGIQUE COMME AUXILIAIRE TECHNOLOGIQUE POUR LE TRAITEMENT DE LIQUIDES ALIMENTAIRES**

VERWENDUNG EINES PILZLICHEN BIOMASSEEXTRAKTS ALS TECHNOLOGISCHER ZUSATZSTOFF FÜR DIE BEHANDLUNG VON FLÜSSIGKEITEN IN LEBENSMITTELQUALITÄT

USE OF A FUNGAL BIOMASS EXTRACT AS TECHNOLOGICAL ADDITIVE FOR TREATING FOOD-GRADE LIQUIDS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **04.07.2005 FR 0507066**

(43) Date de publication de la demande:
**07.05.2008 Bulletin 2008/19**

(73) Titulaire: **Kitozyme S.A.**
**4040 Herstal (BE)**

(72) Inventeurs:
• **TEISSEDRE, Pierre-Louis**
  **F-34090 Montpellier (FR)**
• **BORNET, Aurélie**
  **F-74380 Lucinges (FR)**
• **BRUYERE, Jean-Michel**
  **B-4000 Sclessin (BE)**
• **GAUTIER, Sandrine**
  **B-4000 Liege (BE)**

(74) Mandataire: **Jacobson, Claude et al**
**Cabinet Lavoix**
**2, Place d'Estienne d'Orves**
**75441 Paris Cedex 09 (FR)**

(56) Documents cités:
WO-A-01/73104       WO-A-98/17386
WO-A-03/068824      DE-A1- 1 442 337
DE-A1- 19 810 094   FR-A- 1 408 739

• SPAGNA GIOVANNI ET AL: "The stabilization of white wines by adsorption of phenolic compounds on chitin and chitosan" FOOD RESEARCH INTERNATIONAL, ELSEVIER APPLIED SCIENCE, BARKING, GB, vol. 29, no. 3-4, 1996, pages 241-248, XP002957318 ISSN: 0963-9969 cité dans la demande
• VINCENZI, S. ET AL.: "Removal of Specific Protein Components by Chitin Enhances Protein Stability in a White Wine" AMERICAN JOURNAL OF ENOLOGY AND VITIVULTUE, vol. 56, no. 3, mars 2005 (2005-03), pages 246-254, XP008063484
• DATABASE WPI Section Ch, Week 199723 Derwent Publications Ltd., London, GB; Class D13, AN 1997-245618 XP002378255 & CN 1 099 951 A (ZHANG Y) 15 mars 1995 (1995-03-15)
• DATABASE WPI Section Ch, Week 200535 Derwent Publications Ltd., London, GB; Class D16, AN 2001-192042 XP002378256 & CN 1 101 406 C (UNIV ZHEJIANG) 12 février 2003 (2003-02-12)

## Description

L'invention concerne le traitement de liquides alimentaires par un auxiliaire technologique extrait de biomasse fongique.

Dans le domaine du traitement des liquides alimentaires, notamment du traitement des liquides alimentaires obtenus à partir de végétaux, comme les jus de fruits ou les boissons fermentées, et en particulier les vins, les champagnes, les bières, ou les cidres, il est connu de traiter par des auxiliaires technologiques le produit à obtenir pour éliminer des composés indésirables, notamment qui sont causes d'instabilité et de risques alimentaires, ou pour ajuster sa composition.

Il est connu notamment d'utiliser des composés tels que la bentonite, le kaolin, le PVPP, une gélatine alimentaire, une colle de poisson, la caséine et le caséinate de potassium, l'ovalbumine, la lactalbumine, le dioxyde de silicium sous forme de gel ou de solution colloïdale, etc, pour le traitement des liquides alimentaires, comme ceux mentionnés ci-dessus.

Les mycotoxines, et en particulier l'ochratoxine A (OTA) et les aflatoxines, sont désormais systématiquement contrôlées dans les aliments et les boissons depuis que leurs effets toxiques ont été démontrés (néphrotoxicité, neurotoxicité, immunodéficience, carcinogénicité suspectée). Il est recommandé aujourd'hui de ne pas dépasser une dose journalière en mycotoxines de 0.3-0.9 $\mu$g/jour. Jusqu'à ce qu'une directive européenne en fixe la limite, l'Office International de la Vigne et du Vin (OIV) recommarde de ne pas dépasser une teneur de 2 $\mu$g/l dans les vins.

Des expérimentations en laboratoire et au vignoble ont exploré par ailleurs la piste de la lutte biologique, au moyen de *Trichoderma*, le champignon antagoniste d'*Aspergillus carbonarius*. il a été observé trois fois moins de contamination. Cependant les résultats dépendent vraiment de la souche d'OTA. Les moyens de lutte contre l'OTA relèvent essentiellement de la prophylaxie au vignoble, avec l'inconvénient de voir l'apparition de résidus et métabolites de pesticides dans les raisins et les moûts. Peu de solutions émergent aujourd'hui notamment au niveau oenologique. Si les baies de raisins sont contaminées, alors en vinification, la teneur en OTA augmente pendant la macération. La teneur en OTA est fonction du degré alcoolique. L'alcool est un solvant de la molécule d'OTA et la solubilise dans le vin. Pour les vins rouges, les thermovinifications semblent certes intéressantes, bien que des études complémentaires sur l'optimisation du chauffage de la vendange restent à réaliser (temps de chauffage, température, flash-détente). Les recherches en microbiologie distinguent des produits de désinfection en oenologie plus efficaces que d'autres mais avec des coûts très importants et des risques de non-sélectivité (élimination des souches de levures / bactéries utiles pour la fermentation alcoolique ou malolactique). Quant à l'utilisation d'auxiliaires oenologiques comme le gel de silice, le charbon oenologique, le caséinate de potassium, la gélatine ou les bentonites, les résultats ne sont pas très concluants car ils éliminent très peu d'OTA (hormis le charbon oenologique et le caséinate de potassium) et conduisent à des inconvénients majeurs. Tous ces produits sont susceptibles d'entraîner l'apparition de résidus allergènes notamment dans les moûts et les vins.

L'utilisation de charbon oenologique présente l'inconvénient majeur d'éliminer la totalité des composés phénoliques (anthocyanes et tanins en particulier). Les composés phénoliques sont essentiels en tant que constituants conditionnant la couleur et la perception sensorielle des vins et autres boissons obtenues notamment par fermentation.

Les gels de silice et gélatine sont totalement inefficaces pour éliminer l'OTA et sont normalement utilisés pour effectuer des collages à l'aide de tannins afin de clarifier les moûts ou les vins (éliminer des protéines, ou assouplir). Des utilisations de doses trop élevées de ces produits oenologiques présentent l'inconvénient majeur d'entraîner des casses protéiques dans le cas de la gélatine et de conduire à des risques importants de pertes majeures de polyphénols pour les gels de silice.

Concernant les bentonites, elles sont utilisées pour les opérations de clarification ou de stabilisation protéique des moûts et des vins, et fixent certaines protéines instables pour permettre leur élimination. Elles sont également capables de fixer des matières colorantes. Cependant des travaux montrent que celles-ci libèrent des taux d'aluminium importants dans les moûts. et les vins. Un apport élevé en aluminium dans la ration alimentaire est susceptible d'avoir des répercussions en matière de santé publique au niveau de maladies dégénératives.

D'autre part, plusieurs contraintes existent lors des traitements oenologiques sur moût ou vin :

Pour le détachage des moûts et vin blancs, l'utilisation de charbon oenologique présente l'inconvénient majeur d'éliminer la totalité des composés phénoliques (anthocyanes et tanins en particulier). L'annexe IV du règlement CE 1493/1999 prévoit le traitement des moûts blancs, des vins blancs nouveaux encore en fermentation et des vins blancs par des charbons à usage oenologique dans certaines limites (§ 1 alinéa i et § 3 alinéa o). Bien que la réglementation communautaire ne précise pas explicitement la finalité de ce traitement, celui-ci ne peut être effectué que pour détacher les produits viti-vinicoles blancs et en aucun cas ne doit être mis en oeuvre pour désodoriser des vins présentant un mauvais goût manifeste. En effet, elle prévoit que les traitements ne peuvent être effectués qu'afin de permettre une bonne vinification ou une bonne conservation des produits concernés (art. 42 du règlement CE 1493/1999). Ainsi le charbon actif n'est pas satisfaisant pour résoudre les problèmes techniques posés ci-dessous.

Concernant les traitements actuels de déferrage des vins, la teneur maximale en cuivre fixée par L'OIV est de 1 mg/l. Pour le fer, le risque de casse ferrique intervient à partir d'une teneur d'environ 8 mg/l. Le déferrage consiste à éliminer l'excès de fer susceptible de provoquer une casse ferrique, qui entraîne un aspect « louche » impropre à la consommation. La présence d'un excès de fer est souvent due à une cuverie en mauvais état ou à des particules de terres présentes sur les raisins lors de la vendange. Les produits d'addition des vins traités sont le ferrocyanure de potassium (vin blanc et rosé) et le phytate de calcium (vin rouge).

Pour le traitement au ferrocyanure de potassium, il existe aujourd'hui des contraintes techniques, administratives et analytiques. En particulier l'élimination totale de ferrocyanure de potassium doit être contrôlée sur le vin après le traitement, cela est long, coûteux, méticuleux avec des implications en terme de sécurité alimentaire et de santé publique.

Pour le traitement au phytate de calcium, là encore des contraintes existent concernant les contrôle analytiques et administratif du traitement sous responsabilité de l'oenologue:

- Traitement sous contrôle obligatoire d'un oenologue,
- Après traitement, le vin doit encore contenir des traces de fer,
- Dispositions sur le contrôle de l'utilisation du phytate arrêtée ou à arrêter par chaque état membre.

Concernant la présence de métaux lourds dans les vins, la teneur maximale en métaux lourds dans les vins est régie par l'OIV. Elle est de 200 $\mu$g/l en plomb depuis 1996, et de 10 $\mu$g/l en cadmium depuis 1981.

Le traitement au ferrocyanure de potassium peut également éliminer les traces de métaux lourds. Il est aussi possible d'éliminer des métaux majeurs et lourds, indirectement à l'aide d'une électrodialyse ou à l'aide d'une résine échangeuse de cations. Cependant ce procédé est compliqué à mettre en oeuvre et n'est pas accessible à tous les producteurs, car son coût est élevé. Par ailleurs, ce procédé n'est pas autorisé dans tous les pays.

Par ailleurs des critères de pureté des auxiliaires technologiques en oenologie sont établis les produits oenologiques sont des additifs ou des auxiliaires de fabrication. A ce titre ils doivent répondre aux critères de pureté définis par la réglementation lorsque c'est le cas. Certains produits ne sont pas, plus ou mal définis : c'est le cas de charbons et des tanins par exemple.

Lors d'opérations de vinification, collages, stabilisation, traitements spécifiques, conservation, ou filtration, de nombreux produits oenologiques, additifs, médias-filtrants, ou des traitements spécifiques sont utilisés, et on retrouve généralement plutôt des produits à vocation curative, permettant de remédier à certains problèmes lors de l'élevage des vins. On retrouve principalement :

- les produits déferrants comme le ferrocyanure de potassium pour les vins blancs, et l'Afferol à base de phytate pour les vins rouges ;
- les produits destinés à éliminer des produits d'oxydation, par exemple la caséine soluble, Casei + (caséinate de potassium), le Polylact (PVPP, Caséine), le Viniclar (PVPP)) ;
- les bentonites pour éliminer les éventuels excès de protéines, par exemple Microcol poudre ou granulée.

Les agents autorisés pour le traitement des liquides alimentaires sont connus de l'homme du métier et référencés par les législations nationales, comme par exemple les agents autorisés pour le traitement des vins et des jus de fruits aux USA (27CFR24.246) ou en Europe (règlement CE 1493/1999 et CE 1622/2000).

Parmi ces composés, certains ne sont pas adaptés à traiter différents types de liquides alimentaires, comme par exemple différents vins, différentes bières, différents champagnes, etc,, ou ne sont pas adaptés au retrait des différents composés à éliminer.

Les auxiliaires technologiques mentionnés ci-dessus doivent être utilisés de manière relativement spécifique en fonction de la boisson à traiter. Ainsi par exemple pour deux vins différents, il sera nécessaire d'utiliser des auxiliaire technologique différent, ce qui pose le problème de devoir utiliser différents auxiliaires technologiques durant le traitement. Par exemple, pour élaborer un vin blanc on effectuera un collage du moût à l'aide de bentonite ou de colle de poisson après pressurage afin d'éliminer bourbes et protéines. Par contre dans le cas d'un vin rouge on pourra utiliser de la PVPP qui fixe les polyphénols des vins, pour élaborer par exemple des vins jeunes primeurs.

De la même manière, pour deux étapes différentes du procédé de traitement de la même boisson, il sera nécessaire d'utiliser deux auxiliaires technologiques différents, ce qui pose notamment des problèmes de stockage, d'étiquetage et d'utilisation. Par exemple on procède à l'élimination des produits d'oxydations par la caséine ou le PVPP, mais l'élimination des matières phénoliques colorantes est effectuée par le charbon oenologique, et on utilise des enzymes pectolytiques pour dégrader les pectines. La bentonite n'est par exemple pas utilisée, à l'heure actuelle, pour le traitement du produit fini (conservation, mise en bouteille, ou élevage).

D'autre part, les auxiliaires technologiques connus risquent de détériorer les propriétés organoleptiques, ce qui est préjudiciable à la boisson finie, en particulier dans le cadre des boissons obtenues à partir de végétaux, comme les bières, les vins, les champagnes, les cidres, et les jus de fruits.

Il est connu notamment des demandes de brevet FR 2 599 048 et EP 0,501,381, d'utiliser du chitosane pour le traitement de liquides alimentaires d'origine végétale. C'est aussi l'enseignement de Spagna et al. (Spagna Giovanni et al. « the stabilization of white wines by absorption of phenolic compounds on chitin and chitosan », Food research International, Applied Science, Barking, Vol 29, N°3-4, 1996, pages 241-248) qui décrit l'élimination des polyphénols dans un vin blanc par l'utilisation de chitosane. L'utilisation de la chitine est également décrite, mais, d'après cet article, n'est pas adaptée à éliminer les polyphénols. Cependant l'utilisation du chitosane présente l'inconvénient de provenir d'origine animale pour la presque totalité du chitosane disponible sur le marché, et donc de présenter des risques d'allergies. Le chitosane disponible sur le marché provient principalement carapaces de crustacés (crevette, crabe, homard). En effet, le chitosane est un polysaccharide qui a démontré sa capacité à clarifier et stabiliser des liquides alimentaires, et qui est disponible commercialement, néanmoins uniquement pour les usages domestiques et non industriels comme auxiliaire pour la fabrication domestique du vin et de la bière. L'utilisation de ce chitosane d'origine animale comme auxiliaire technologique pour le traitement et la stabilisation des liquides alimentaires pose au moins deux problèmes. D'une part, les auxiliaires de technologie d'origine animale ne sont pas appréciés par la plupart des producteurs de liquides alimentaires, et doivent ou devront être systématiquement cités sur l'étiquetage comme demandé par les législations en vigueur ou en préparation. D'autre part, les extraits de crustacés sont déconseillés aux personnes allergiques aux crustacés, qui sont alertées sur l'étiquette. Il faut savoir que l'allergie aux crustacés est une des plus courantes (3% des adultes aux USA selon une étude récente).

La demande de brevet WO 98/17386 concerne une méthode pour éliminer uniquement les pesticides de jus de fruits en utilisant notamment des dérivés de chitine ou de chitosane. Cependant là encore, les composés utilisés et décrits par l'invention sont d'origine animale.

La demande de brevet WO 98/17386 concerne une méthode pour enlever des pesticides et/ou phytochimiques de liquidés alimentaires et non alimentaires. Dans cette demande, il est fait référence à la chitine et au chitosane, cependant aucun exemple n'est donné concernant ces composés. Les composés utilisés dans les exemples de cette demande de brevet concernent des dérivés du type alkylesters ou arylesters de la chitine, de polysaccharides, ou du chitosane. Bien que ces composés hydrophobes du type octanoyl- ou benzoyl-chitine permettent l'élimination des pesticides, qui sont des molécules de nature lipophile, il n'est pas évident, sans expérience supplémentaire, que la chitine seule aurait permis d'éliminer les pesticides. D'autre part, il n'est pas possible d'extrapoler le traitement décrit dans cette demande à l'élimination d'autres molécules telles que des protéines, des polyphénols, des mycotoxines, des métaux, etc, molécules qui sont présentes dans les liquides alimentaires d'origine végétale. Ainsi ce document ne décrit pas un auxiliaire technologique permettant le traitement de liquides alimentaires d'origine végétale sans en détériorer sensiblement les propriétés organoleptiques.

La demande de brevet DE 198 10 094 (US 6,402,953) décrit l'utilisation de chitine ou de chitosane d'origine fongique pour traiter les contaminants radioactifs de solution aqueuse, notamment pour en éliminer les métaux lourds tels que le césium, l'uranium, le plutonium, etc. Cette demande est donc très éloignée du domaine technique de la présente invention, qui concerne le traitement de liquides alimentaires d'origine végétale. D'autre part, au vu du procédé d'obtention de « l'absorbant » décrit dans les exemples, le matériau à base de chitine d'origine fongique décrit dans ce document n'est pas pur, dans le sens où il risque d'entraîner la libération de résidus solubles dans le liquide alimentaire traité, ce qui est contraire à l'objectif de la présente invention. Ce composé impur permettrait de traiter de l'eau, mais ne serait pas réellement adapté à traiter des liquides alimentaires d'origine végétale, qui comprennent notamment des protéines, des polyphénols, des métaux, des mycotoxines, pour notamment conserver et/ou ne pas altérer ses propriétés organoleptiques.

Ainsi l'art antérieur ne permet pas de fournir un auxiliaire technologique permettant le traitement de liquides alimentaires d'origine végétale, car soit l'auxiliaire risque de détériorer sensiblement les propriétés organoleptiques en libérant des résidus, soit il risque d'altérer les propriétés organoleptiques en éliminant des composés bénéfiques, soit il n'est pas adapté à un usage alimentaire en raison d'une origine animale en général indésirable.

## BUTS DE L'INVENTION

Ainsi, l'invention a pour but principal de résoudre le problème technique consistant en la fourniture d'un auxiliaire technologique permettant le traitement de liquides alimentaires en particulier d'origine végétale, comme en particulier des boissons fermentées (vins, bière, champagnes, cidres, etc.), des spiritueux (whisky, eaux-de-vie, etc.), et des jus de fruits, sans détériorer sensiblement leurs propriétés organoleptiques.

Les inventeurs ont également cherché à fournir un auxiliaire technologique qui présente une sécurité alimentaire irréprochable, tout en étant disponible en grand volume et à un coût compatible avec les pratiques de production des liquides alimentaires.

Les inventeurs ont encore cherché à fournir un auxiliaire technologique d'origine naturelle non-animale, de grande qualité et avec une excellente traçabilité.

L'invention a pour but de résoudre également le problème technique consistant en la fourniture d'un auxiliaire technologique pour stabiliser les liquides alimentaires finis, tout en préservant leurs propriétés organoleptiques.

L'invention a pour but de résoudre le problème technique consistant en la fourniture d'un auxiliaire technologique pour décontaminer les liquides alimentaires finis, notamment pour obtenir des teneurs en impuretés en dessous des niveaux définis par la législation en vigueur, en particulier pour les vins, champagnes, cidres, et bières.

L'invention a pour but de résoudre le problème technique consistant en la fourniture d'un auxiliaire technologique pour clarifier les liquides alimentaires finis.

La présente invention a notamment pour but de résoudre les problèmes définis ci-dessus notamment dans le cadre du traitement des vins, des vins rouges et/ou des vins blancs et/ou vins rosés et/ou vins doux naturels.

Encore, la présente invention a pour but de fournir un auxiliaire technologique unique pour effectuer différentes étapes du traitement d'une boisson, et de préférence du vin, du champagne, du cidre, ou de la bière. La présente invention a également pour but de fournir un auxiliaire technologique utilisable pour différents vins, champagnes, cidres, bières, etc.

Enfin, la présente invention a pour but de résoudre l'ensemble des problèmes techniques mentionnés ci-dessus de manière fiable, peu coûteuse et utilisable industriellement, et notamment de manière moins coûteuse et plus rentable qu'en utilisant un chitosane non-animal.

## DESCRIPTION DE L'INVENTION

Il existait dans le domaine technique l'a priori qu'un auxiliaire technologique pour le traitement des liquides alimentaires, notamment des liquides alimentaires d'origine végétale éventuellement obtenus par fermentation alcoolique, de préférence des vins, des bières, des champagnes, des cidres, et des jus de fruits, doit être avantageusement chargé, notamment positivement.

Ainsi l'homme du métier, pour résoudre les problèmes techniques énoncés ci-dessus, qui aurait eu l'idée d'utiliser un polymère naturel d'origine non-animale aurait pu utiliser le chitosane d'origine végétale pour réaliser le traitement de liquides alimentaires, puisque le chitosane est un polymère cationique et qu'il peut dès lors capter les composés indésirables chargés anioniquement. En effet les présents inventeurs avaient déjà inventé un procédé de production de chitosane d'origine non-animale, à partir de ressources végétales, plus particulièrement d'origine fongique, et plus particulièrement d'un champignon de type *Aspergillus niger*. Cependant, les inventeurs ont découvert de manière surprenante que le chitosane n'est pas le polymère le mieux indiqué accessible par le procédé décrit dans la demande internationale WO 03/068824 pour clarifier et/ou stabiliser les liquides alimentaires.

De manière surprenante il a été découvert par les présents inventeurs qu'un extrait de biomasse fongique comprenant majoritairement au moins un polysaccharide non-ionique peut être utilisé de manière très satisfaisante dans le cadre des traitements des liquides alimentaires, notamment liquides alimentaires d'origine végétale, éventuellement obtenus par fermentation alcoolique, et de préférence des vins, des bières, des champagnes, des cidres, et des jus de fruits.

Ainsi, la présente invention concerne l'utilisation d'un extrait de biomasse fongique comprenant majoritairement au moins un polysaccharide non-ionique comme auxiliaire technologique pour le traitement de liquides alimentaires, notamment liquides alimentaires d'origine végétale, éventuellement obtenus par fermentation alcoolique, et de préférence des vins.

Les inventeurs entendent par «auxiliaire technologique» toute substance non consommée comme ingrédient alimentaire en soi ou volontairement utilisée dans la transformation des matières premières et pouvant avoir pour résultat la présence non intentionnelle de résidus techniquement inévitables de cette substance ou de ses dérivés dans le produit fini. Les auxiliaires technologiques ne font notamment pas partie des ingrédients du liquide alimentaire, ils sont utilisés uniquement pendant la préparation du produit pour la faciliter, mais n'entrent pas dans la composition du produit fini.

Par le « traitement des liquides alimentaires », de préférence des vins, les inventeurs entendent notamment toute opération visant à stabiliser le liquide par élimination des composés responsables de trouble ou d'instabilité dans le temps, à rendre le liquide propre à la consommation, notamment en améliorant l'aspect, le goût, tout en amenant les teneurs en impuretés en dessous des niveaux définis par la législation en vigueur.

Des exemples de « liquides alimentaires d'origine végétale» sont les jus de fruits, et des exemples de « liquides alimentaires d'origine végétale obtenus par fermentation alcoolique » sont les boissons fermentées (vins, bière, etc.), et les spiritueux (whisky, eaux-de-vie, etc). Les liquides alimentaires d'origine végétale que l'on peut traiter par l'extrait fongique de la présente invention ne sont pas limités et sont par exemple choisis parmi les boissons alcooliques (vins, cidres, champagnes, etc), les liqueurs (vins de liqueur, porto, liqueurs de fruits, etc.), les boissons distillées (cognac, gin, tequila, eaux-de-vie, etc.), les boissons alcoolisées (pastis, cocktails, etc.), les jus de fruits (y compris les légumes), les soupes, les vinaigres, y compris les mélanges de ceux-ci, et un mélange d'une des boissons précitées d'origine végétale avec une autre boisson d'origine non végétale pour réaliser un mélange liquide alimentaire comme par exemple un mélange de lait et de jus de fruits. Avantageusement, le liquide alimentaire d'origine végétale est choisi parmi une boisson fermentée, et un jus de fruit.

**EP 1 917 345 B1**

Les inventeurs entendent par « majoritairement au moins un polysaccharide non-ionique » un extrait comprenant une quantité efficace de polysaccharide non-ionique pour être utilisé en tant qu'auxiliaire technologique selon la présente invention, présent dans l'auxiliaire technologique en quantité supérieure aux autres composés présents. La quantité de polysaccharide non-ironique à utiliser dans l'auxiliaire technologique peut être déterminée par l'homme du métier, et est de préférence supérieure à 70 % en masse par rapport à la masse totale de l'auxiliaire technologique total, de préférence supérieure à 75 %, de préférence supérieure à 80 %, de préférence supérieure à 85 %, de préférence supérieure à 90 %, et encore de préférence supérieure à 95 %. Les autres composés présent dans l'auxiliaire technologique n'agissent pas dans le phénomène de traitement du liquide alimentaire, il est donc préférable de les éliminer partiellement ou totalement, ce qui augmente la capacité à traiter le liquide alimentaire à dose équivalente.

Les auxiliaires se comportent notamment comme une couche de matériau filtrant et ne sont donc pas présents dans le liquide final.

D'une manière générale, la présente invention qui met en oeuvre des extrais fongiques est très simple d'utilisation. L'extrait fongique selon la présente invention est utilisé de préférence sous forme d'une poudre qui va floculer en adsorbant les composés indésirables. Son utilisation est compatible avec les pratiques employées pour le traitement des liquides alimentaires communément employées aujourd'hui, ne demande pas d'équipement particulier, et est compatible avec le prix habituel des traitement utilisés, en particulier pour les traitements oenologiques. Ils sont donc accessibles à tous les producteurs.

Ainsi, on peut par exemple utiliser l'extrait fongique selon la présente invention à une concentration comprise entre 1 g/hl et 1 kg/hl de liquide à traiter. De préférence on utilise une quantité comprise entre 10 g et 500 g par hl de liquide à traiter, et encore de préférence entre 10 et 200 g/hl de liquide à traiter.

On peut par exemple ajouter l'extrait fongique selon la présente invention au liquide à traiter contenu dans une cuve, qui est avantageusement agité pour délayer l'extrait fongique. Cette opération peut être effectuée à température ambiante (20-25°C) mais peut l'être également à chaud ou froid dans des limites raisonnables pour ne pas détériorer la future boisson. Cette opération peut être réalisée pendant une période comprise entre quelques heures et quelques jours, qui est de préférence ajustée par l'homme du métier. Ensuite, on procède avantageusement à la séparation de l'extrait fongique du liquide par des méthodes connues de l'homme de l'art comme la filtration ou la décantation.

La capacité de production de ces extraits fongiques, liée à la présence d'une source fongique renouvelable, donne accès à des volumes compatibles avec les besoins de l'industrie alimentaire, comme par exemple pour la production des vins, des bières, des champagnes, des cidres, ou des jus de fruits.

L'extrait fongique selon la présente invention peut être utilisé dans une étape quelconque du traitement du liquide alimentaire, et de préférence dans un maximum d'étapes de ce traitement.

Avantageusement, l'extrait fongique selon la présente invention permet l'élimination partielle ou complète de composés indésirables, causes d'instabilité ou de risques sanitaires.

Avantageusement, les composés indésirables sont choisis parmi le groupe consistant des colloïdes causant l'instabilité, des colloïdes causant le trouble, colloïdes procurant des propriété organoleptiques de mauvaise qualité, des protéines, des métaux, des métaux lourds, en particulier le cuivre, le fer, le cadmium et le plomb, des pesticides résiduels comme les fongicides, les insecticides, et les herbicides, et des toxines comme les mycotoxines et les endotoxines bactériennes, et que leur élimination a pour but d'amélioré la qualité de liquide alimentaire.

Avantageusement, l'extrait fongique selon la présente invention permet le traitement de liquides alimentaires finis (traitements après fermentation comme la mise en bouteille ou l'élevage).

Ainsi, on peut éliminer des composés indésirables dans le liquide alimentaire pour obtenir une boisson prête à la consommation, ou modifier la composition du liquide pour obtenir une boisson ayant une composition préférée (couleur, goût, etc), et optimisée.

L'avantage de l'utilisation des extraits fongiques proposés par les inventeurs est qu'ils permettent d'obtenir une efficacité en particulier dans le traitement des moûts, vins et boissons alcoolisées ou alcooliques, pour éviter la casse ferrique, pour éliminer les produits d'oxydations, éliminer les éventuels biocides (pesticides , herbicides, fongicides, etc.), et/ou les protéines sans toucher de façon importante aux autres constituants du liquide alimentaire, comme les composés phénoliques notamment pour le vin, et tout en évitant tout risque de relarguage de résidus, et tout risque d'allergénicité.

Un autre avantage des extraits fongiques est de permettre une réduction des contaminants toxiques des diverses boissons, par exemple des moûts, vins et spiritueux, etc., tels que mycotoxines, métaux lourds (plomb, cadmium), métaux majeurs (fer), pesticides.

Dans le cadre de la présente invention, l'auxiliaire technologique est utilisé avantageusement pour le traitement des boissons d'origine végétale, comme les jus de fruits, les vins et/ou d'autres boissons issues de fermentation comme la bière, le champagne, le cidre, et permet notamment :

a) d'éliminer les particules terreuses ;
b) d'éliminer les particules organiques afin de réduire l'activité phénoloxydasique ;

c) de réduire la flore microbienne indigène ;

d) de réduire la teneur en colloïdes et la turbidité ;

e) d'éventuellement de diminuer la présence de composés polyphénoliques du moût pour en abaisser l'astringence, avant la fermentation ;

f) d'éliminer des particules insolubles dans le moût ;

g) de faciliter le dépouillement des vins nouveaux par la précipitation partielle des matières protéiques en excès ;

h) de réaliser un traitement préventif des casses protéiques et cuivreuses ;

i) de corriger des caractères organoleptiques des vins issus de moûts altérés par des champignons comme la pourriture ou l'oïdium ;

j) d'éliminer des contaminants éventuels ;

k) de corriger la couleur :

• des moûts blancs issus de raisins rouges à jus blanc (éventuellement tachés),
• des moûts très jaunes issus de cépages blancs,
• des moûts oxydés ;

m) de réduire la population indigène des microorganismes avant la fermentation alcoolique pour l'ensemencement ultérieur des levures sélectionnées;

n) de précipiter les particules en suspension : soit en favorisant la chute libre de celles-ci, soit en se coagulant autour des particules à éliminer en les entraînant dans les sédiments ;

o) d'assouplir les vins rouges en leur enlevant une partie des tanins et polyphénols ;

p) de clarifier les vins troublés par casse, remontée de lies, insolubilisation de matières colorantes, etc. ;

q) d'obtenir la limpidité du vin ;

r) d'obtenir la stabilité biologique du vin par élimination des micro-organismes (filtration stérilisante) ;

s) de faciliter le dépouillement des vins nouveaux par la précipitation partielle des matières protéiques en excès ;

t) d'éliminer un excès de cuivre colloïdal utilisé lors du traitement au sulfate de cuivre pentahydraté au vin pour enlever le mauvais goût et l'odeur dus à l'hydrogène sulfuré et éventuellement à ses dérivés ;

u) à éliminer l'excès de fer du vin, en prévention des casses ferriques en utilisation avec une oxygénation combinée ;

v) de prévenir les casses protéique et cuivreuse : protéger le vin contre la casse ferrique légère, empêcher la précipitation de substances telles que les matières colorantes qui, dans le vin, sont à l'état colloïdal ;

w) de fixer les ions ferriques et diminuer ainsi la tendance à la casse ferrique ;

x) de diminuer la teneur du vin en fer pour éviter la casse ferrique, ou en cuivre pour éviter la casse cuivreuse, et plus généralement en métaux lourds ;

y) de prévenir la casse ferrique dans le cas de vins riches en fer, mais n'ayant pas d'excès de cuivre ; ou

z) de diminuer la teneur du vin en tanins et autres polyphénols pour combattre la tendance au brunissement, réduire l'astringence, ou corriger la couleur des vins blancs tachés.

L'auxiliaire technologique selon la présente invention n'est pas une préparation enzymatique à ajouter au moût ou au vin pour améliorer la filtrabilité par hydrolyse enzymatique, notamment par hydrolyse enzymatique des pectines et/ou des glucanes cédées au moût ou au vin par Botrytis cinerea et/ou certaines souches de levures.

Selon un mode de réalisation avantageux, l'auxiliaire technologique selon la présente invention est utilisé pour le traitement d'un alcool fermenté, liquide qui est particulièrement délicat à traiter pour conserver ses propriétés organoleptiques.

La présente invention concerne selon un mode de réalisation particulier l'utilisation d'extrait de biomasse fongique pour la clarification d'un liquide alimentaire d'origine végétale et de préférence pour la clarification du vin.

Les inventeurs entendent par « clarification du vin » la séparation, avant ou pendant la fermentation, du liquide plus ou moins clair des matières solides en suspension dans le moût et/ou le vin à l'aide d'auxiliaires appropriés.

Les auxiliaires utilisés doivent être conformes aux législations en vigueur, et dans le cadre du vin ils doivent être conformes aux prescriptions du Codex Oenologique International.

Les auxiliaires technologiques selon la présente invention sont avantageusement des extraits de biomasses fongiques comprenant majoritairement des polysaccharides non-ioniques, comprenant majoritairement au moins un copolymère chitine-glucane.

Avantageusement, le polysaccharide non-ionique comprend majoritairement des unités N-acétyl-D-glucosamine (chitine) et D-glucose (beta-glucane).

De préférence le copolymère chitine-glucane est un copolymère qui comprend majoritairement des chaînes macromoléculaires d'unités N-acétyl-D-glucosamine liées entre elles de préférence par des liaisons alpha(1,6) (communément appelé chitine) et des chaînes macromoléculaires d'unités D-glucose liées entre elles de préférence par des liaisons beta (beta-glucane), par exemple de type beta(1,3), beta(1,4), beta(1,3-1,4), beta(1,6), avec de préférence un rapport chitine/glucane allant de 95:5 à 5:95, de préférence de 70:30 à 20:80, et de préférence encore de 70:30 à 40: 60 (m/m).

Ces extraits sont totalement insolubles dans les liquides alimentaires tels que le vin, la bière, les jus de fruits, etc.

Avantageusement, le copolymère chitine-glucane est un copolymère (N-acétyl-D-glucosamine)-(D-glucose).

Avantageusement, les auxiliaires technologiques selon la présente invention sont obtenus par le procédé décrit dans la demande internationale WO 03/068824 déposée au nom de KitoZyme S.A. le 12.02.2003, qui est incorporée ici entièrement par référence.

L'extrait fongique peut être obtenue à partir de resources non-animales, en particulier à partir de paroi cellulaire de mycélium fongiques de différents groupes, incluant *Zygomycetes, Basidiomycetes, Ascomycetes* et *Deuteromycetes* et/ou un mélange de ceux-ci, et de préférence *Ascomycetes*. Les *Aspergillii* appartiennent au dernier groupe. Dans un mode de réalisation préférée, l'invention concerne une méthode caractérisée en ce que la biomasse est choisie parmi le groupe consistant en des champignons filamenteux tels que *Aspergillium, Penicillium, Trichoderma, Saccharomyces*, et *Schizosaccharomyces*, et les champignons comestibles tels que *Agaricus, Pleurotus, Boletus*, et *Lentinula*, et/ou un mélange de ceux-ci. La caractéristique commune de ces champignons est la présence de polysaccharides dans leur paroi cellulaire, préférentiellement de chitine et/ou de beta-glucane. Selon un mode de réalisation préféré, les extraits fongiques sont obtenus à partir d'*Aspergillus niger*, de manière économiquement très rentable.

Le procédé selon la présente invention comprend la mise en contact de la biomasse avec une solution basique, dans lequel une fraction soluble en milieu alcalin et une fraction insoluble en milieu alcalin sont obtenues et dans lequel la fraction soluble en milieu alcalin est écartée et la fraction insoluble en milieu alcalin qui comprend majoritairement les polysaccharides non-ioniques est retenue.

La fraction insoluble en milieu alcalin comprend majoritairement des polysaccharides non-ioniques qui comprennent avantageusement au moins un copolymère chitine-glucane.

Avantageusement, la solution alcaline utilisée pour digérer la biomasse fongique est une solution aqueuse de métal alcalin comme par exemple l'hydroxyde de sodium, l'hydroxyde de potassium, l'hydroxyde d'ammonium, et de préférence l'hydroxyde de sodium ou de potassium.

Avantageusement, la concentration du réactif alcalin est de préférence comprise entre 0,1 et 40 % (m/v), et de préférence inférieure à 10 %, et de préférence inférieur à 1%. La réaction est réalisée à une température de préférence allant de 5 à 120°C, et de préférence inférieure à 60°C, et encore de préférence à température ambiante. La biomasse est mise à réagir en suspension dans une solution alcaline à une concentration de préférence allant de 1 à 15 % (masse sèche, m/v), de préférence comprise entre 3 et 12%.La réaction est de préférence réalisée pendant moins de 4 heures. La première étape d'extraction permet d'éliminer les composés solubles en milieu alcalin, incluant les pigments, les protéines, quelques lipides, et quelques polysaccharides autres que les polysaccharides non-ioniques. Avantageusement on élimine au moins une partie des composés lipophiles dont des résidus peuvent être libérés dans le liquide alimentaire, entraînant une altération de son goût.

Selon un mode de réalisation préféré, la biomasse peut être traitée par la première solution alcaline, filtrée par une technologie connue par l'homme de l'art, préférentiellement à l'aide d'un filtre-presse, et traitée une nouvelle fois avec une seconde solution alcaline à une concentration en réactif alcalin équivalente à la première étape ou différente. Des réactifs supplémentaires peuvent être utilisés pour améliorer l'extraction des polysaccharides recherchés pour la présente invention. De tels réactifs sont choisis de préférence parmi les solvants organiques comme le cyclohexane, l'acétate d'éthyle, le méthanol ou l'éthanol ; des agents anti-mousse tels que le structol ; des tensioactifs tels que le sulfate de dodécyle sodium, le poly(vinyl alcool), tween ou un poloxamer ; des préparations enzymatiques contenant la carboxylesterase, la carboxylic ester hydrolase, ou la triacylglycérol lipase, des agents de blanchiment comme le peroxyde d'hydrogène. Une étape préliminaire au traitement alcalin peut être constituée d'une ou deux traitements rapides en milieu acide, à l'aide d'un acide minéral.

Pour isoler le produit insoluble en milieu alcalin de la biomasse cellulaire qui comprend majoritairement les polysaccharides non-ioniques de type chitine-glucane, la première étape est suivie par des lavages répétés à l'eau, suivie par une filtration, un traitement destiné à éliminer les composés lipidiques à l'aide d'un solvant organique comme l'éthanol, une filtration, et un séchage. De préférence, la filtration est réalisée avec un filtre-presse.

Pour enrichir en chitine l'extrait obtenu, qui comprenait initialement majoritairement des polysaccharides chitine et beta-glucane sous la forme d'un copolymère, la première étape est par exemple suivie par des lavages répétés à l'eau, suivi d'autres étapes comme décrits ci-dessous. On peut également ainsi obtenir un polymère riche en chitine.

Une seconde étape du procédé selon la présente invention comprend la mise en contact de la fraction insoluble en milieu alcalin avec une solution acide, en suspendant ladite fraction insoluble en milieu alcalin et en amenant ladite fraction suspendue en contact avec la solution acide de manière obtenir une suspension de la fraction insoluble en milieu alcalin acidifiée comprenant les polysaccharides non-ioniques.

Après la dernière étape de filtration décrite ci-dessus, le produit insoluble en milieu alcalin peut être suspendu dans l'eau de manière à obtenir une concentration de préférence comprise entre 1 et 8 % (m/v), et de préférence comprise entre 1 et 5 % de produit insoluble suspendu dans l'eau. Ensuite le pH de la suspension aqueuse de produit insoluble en milieu alcalin est ajustée en dessous de 7,0 par l'ajout d'une solution acide, de préférence en dessous de 6.0, et de préférence supérieur à 3.0.

La solution acide est de préférence une solution aqueuse d'un acide, comme par exemple l'acide chlorhydrique, acétique, formique, lactique, glutamique, aspartique, ou glycolique, et de préférence l'acide acétique. Cette étape est de préférence réalisée à une température comprise entre 5 et 60°C, et de préférence inférieure à 30°C.

Une troisième étape du procédé selon la présente invention comprend la mise en contact de la fraction insoluble en milieu alcalin acidifiée avec au moins une préparation enzymatique riche en enzymes d'activité beta-glucanase, enzyme beta-glucanase permettant d'obtenir l'extrait de biomasse fongique qui comprend majoritairement les polysaccharides non-ioniques enrichis en chitine. Avantageusement, la méthode est caractérisée en ce que les préparations enzymatiques contiennent au moins une enzyme d'activité beta-glucanase choisie parmi le groupe des activités endo-beta-(1,3)-glucanase, l'exo,-beta-(1,3)-glucanase, la beta-(1,3)(1,4)-glucanase, la beta-(1,6)-glucanase, et un mélange quelconque de celles-ci.

Avantageusement, un mélange d'enzymes est ajouté à la suspension de la fraction insoluble en milieu alcalin acidifié pour hydrolyser les chaînes beta-glucane qui sont associées avec la chitine. La réaction d'hydrolyse est de préférence réalisée à une température comprise entre 5 et 60°C, et de préférence encore inférieure à 40°C. La durée de réaction est de préférence inférieure à 5 jours. Des préparations préférées sont illustrées dans la demande WO 03/068824.

Avantageusement, l'extrait de biomasse fongique comprend au moins un copolymère de chitine-glucane, éventuellement enrichi en chitine. Le rapport chitine/glucane peut être facilement ajusté en contrôlant les conditions de réaction, notamment par la beta-glucanase utilisée et par la durée de réaction.

On peut par exemple obtenir un copolymère chitine-glucane comprenant une quantité de chitine (poly(N-acétyl-D-glucosamine)), inférieure à 60 % en masse par rapport à la masse totale du copolymère, de préférence inférieure à 50 %, et encore de préférence comprise entre 20 et 50 %. Ce copolymère est notamment obtenu après la première étape de traitement par une solution alcaline.. Des exemples pour obtenir ce copolymère sont donnés dans la demande WO 03/068824, exemples 1 et 2.

On peut également par exemple obtenir un copolymère chitine-glucane comprenant une quantité de glucane (poly(D-glucose)) inférieure à 30 % en masse par rapport à la masse totale du copolymère, de préférence inférieure 25 %. Ce polymère enrichi en chitine est obtenu après la troisième étape de traitement par une enzyme à activité beta-glucanase. Des exemples pour obtenir ce copolymère sont donnés dans la demande WO 03/068824, exemples 4 et 5.

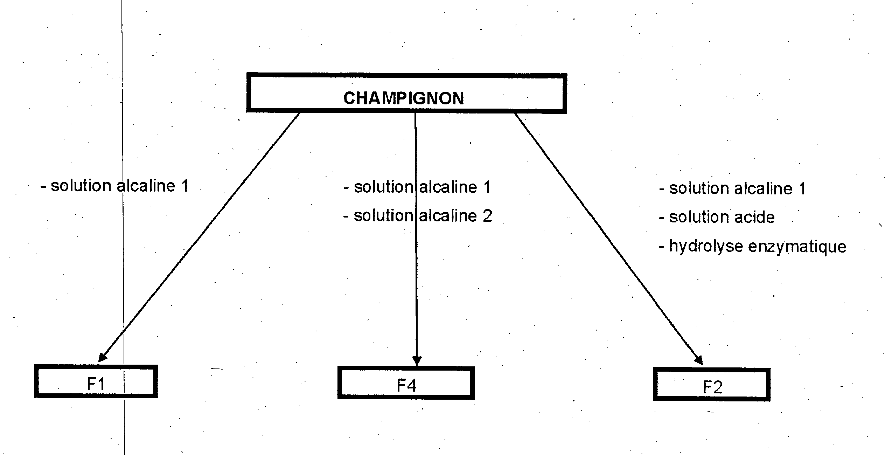

Sur l'unique figure est représenté une vue schématique du procédé d'extraction des polysaccharides non-ioniques et des différents extraits qui peuvent être utilisés.

La figure illustre les principaux extraits que l'on peut obtenir à partir de champignons. Il est fait référence ici aux extraits fongiques utilisés dans les exemples sans vouloir limiter la portée de l'invention.

Ainsi l'extrait F1 peut être obtenu par le traitement de champignons par une solution alcaline, de préférence à une concentration inférieure à 10%. L'extrait F4 est obtenu par le traitement de champignons par une première solution alcaline à une concentration de préférence inférieure à 10 %, suivi du traitement par une seconde solution alcaline à une concentration de préférence supérieure à 10 %. L'extrait F2 est obtenu par le traitement de champignons par solution alcaline, le traitement par une solution acide, et le traitement par une enzyme à activité beta-glucanase.

D'autres buts, caractéristiques et avantages de l'invention apparaîtront clairement à l'homme de l'art suite à la lecture de la description explicative qui fait référence à des exemples qui sont donnés seulement à titre d'illustration et qui ne sauraient en aucune façon limiter la portée de l'invention.

Les exemples font partie intégrante de la présente invention et toute caractéristique apparaissant nouvelle par rapport à un état de la technique antérieure quelconque à partir de la description prise dans son ensemble, incluant les exemples, fait partie intégrante de l'invention dans sa fonction et dans sa généralité.

Ainsi, chaque exemple a une portée générale.

D'autre part, dans les exemples, tous les pourcentages sont donnés en masse, sauf indication contraire, et la température est exprimée en degré Celsius sauf indication contraire, et la pression est la pression atmosphérique, sauf indication contraire.

## **EXEMPLES**

Les procédés de clarification et de traitement des liquides alimentaires par l'utilisation d'extraits issus de biomasses fongiques sont réalisés dans le cas des moûts de raisin et des vins rouge, blancs, rosés et doux naturels, mais sont uniquement illustratifs et ne portent aucune atteinte à la portée de la protection demandée. En particulier, les vins sont des boissons dont la composition est très complexes et « fragile ». En réalisant le traitement des vins par l'extrait fongique selon la présente invention, il est illustré de diversité des liquides que l'on peut traiter.

Dans les exemples suivants il est fait référence aux extraits fongiques F1, F2 et F4. Ces extraits sont obtenus de la manière suivante :

Pour préparer l'extrait fongique F1, Une masse de 50 kg (poids sec) de biomasse *Aspergillus niger* humide est mise en suspension dans une solution d'acide chlorhydrique à une concentration de 1%, puis filtrée. La matière solide est ensuite mise en suspension dans une solution d'hydroxyde de sodium à 0.25%, puis filtrée. La matière solide est lavée 4 fois à l'eau, puis séchée. Elle est ensuite mise en suspension dans l'éthanol, puis filtrée et séchée. On obtient environ 20 kg de matière F1.

Pour préparer l'extrait fongique F2, une masse de 50 kg (poids sec) de biomasse *Aspergillus niger* humide est mise en suspension dans une solution d'acide chlorhydrique à une concentration de 1%, puis filtrée. La matière solide est ensuite mise en suspension dans une solution d'hydroxyde de sodium à 0.25%, puis filtrée. La matière solide est lavée 4 fois à l'eau, puis mise en suspension dans l'eau. De l'acide acétique glacial est ajouté jusqu'à un pH de 5.3. 1 kg de préparation enzymatique riche en beta-glucanase est ajouté, et la réaction est poursuivie pendant 4 jours à température ambiante. La matière est filtrée, puis mise en suspension dans l'éthanol en présence d'hydroxyde de potassium, à 60°C pendant 1 heure, puis filtrée. La matière est ensuite mise en suspension dans l'éthanol, puis filtrée. La matière constituée du copolymère riche en chitine est ensuite séchée. On obtient environ 8 kg de matière F2.

Pour préparer l'extrait fongique F4, une masse de 50 kg (poids sec) de biomasse *Aspergillus niger* humide est mise en suspension dans une solution d'acide chlorhydrique à une concentration de 1%, puis filtrée. La matière solide est ensuite mise en suspension dans une solution d'hydroxyde de sodium à 0.25%, puis filtrée. La matière est ensuite mise en présence d'une solution d'hydroxyde de sodium concentrée à 30% à 100°C pendant 2 heures. Elle est ensuite lavée plusieurs fois à l'eau, puis mise en suspension dans l'éthanol, puis filtrée et séchée. On obtient environ 5 kg de matière F4.

Les caractéristiques moléculaires et de pureté des extraits fongiques sont donnés dans le tableau 1.

Tableau 1- Caractéristiques moléculaires et pureté des extraits fongiques

|  | **Chitine** en % du copolymère chitine-glucane | **Beta-glucane** en % du copolymère chitine-glucane | **Pureté du copolymère chitine-glucane** en % massique de l'extrait fongique |
|---|---|---|---|
| **F1** | 46 | 54 | 97 |
| **F4** | 26 | 74 | 98 |
| **F2** | 78 | 22 | 97 |

Dans les exemples suivants, il est également fait référence à des produits C1 et F7, qui sont tous deux des chitosanes, utilisés sous forme de poudre solide.

C1 est un chitosane d'origine crustacé disponible commercialement. (Chitoclear LV, Primex, pureté 99%, degré d'acétylation 16 mol%, masse moléculaire moyenne viscosimétrique 70,000).

F7 est un chitosane d'origine fongique, obtenu par déacétylation d'un extrait fongique riche en chitine (KitoZyme, pureté 97%, degré d'acétylation 10 mol%, masse moléculaire moyenne viscosimétrique 10,000).

**EXEMPLE 1 : Stabilisation des moûts de vins rouge et blanc par un extrait fongique**

Des moûts de vins rouge et blanc ont été traités par ajout des extraits fongiques F1, F2, F7, et C1 en cours de fermentation. La fermentation a été effectuée avec une levure *S. cerevisiae* Lalvin BM 45 à 22°C. L'ajout d'un extrait fongique à une dose de 10 ou 50 g/hL est effectué après 6 jours, excepté pour le vin témoin. La fermentation est stoppée 3 jours plus tard.

Pour cette étude, il a été utilisé 110 litres de moût de raisin rouge de cépage Grenache noir et 110 litres de moût de raisin blanc de cépage Grenache blanc provenant de l'INRA de Pech Rouge à Gruissan (Aude). Ces 110 litres de moût rouge ou blanc ont été répartis en 11 cuves de 10 litres chacune. Chaque cuve a ensuite été levurée en utilisant la levure *Saccharomyces cerevisiae* BM 45 de Lalvin, avec réhydratation dans l'eau tiède en incorporant des nutriments (thiamine 60 mg/hl ; phosphate d'ammonium 200 mg/l)

La fermentation est menée à la température de 22°C et dure 9 jours. Après 6 jours de fermentation, on ajoute à une dose de 10 g/hl ou 50 g/hl au sein des cuves l'un des composés suivants : :

- L'extrait fongique F2
- L'extrait fongique F1
- Le chitosane F7 ou C1
- L'extrait fongique F4

La cuve témoin ne subit aucun traitement. La fermentation se poursuit jusqu'à l'arrêt après épuisement des sucres à l'issue des traitements (3 jours). Durant la fermentation on effectue quotidiennement la mesure de la température et la mesure de la masse volumique afin de suivre l'évolution de la fermentation.

La turbidité, la teneur en protéines et la concentration en composés polyphénoliques sont dosés sur les vins en fin de fermentation, comme explicité ci-dessous.

La turbidité est mesurée par turbidimétrie, méthode officielle de l'OIV (Résolution Oeno 4/2000 - Turbidité des vins) et exprimée en NTU (unité de turbidité né élométrique). La diminution de la turbidité est mesurée par la méthode officielle de l'OIV, résolution OENO 4/2000. Il s'agit de la mesure de la réduction de la transparence d'un liquide due à la présence de matières non dissoutes. L'appareil utilisé est un turbidimètre 2100N marque HACH. L'unité de mesure de l'indice de turbidité, le NTU, correspond à la mesure de la lumière diffusée par une suspension étalon de formazine sous un angle de 90° par rapport à la direction du faisceau incident. La réalisation de la mesure doit être opérée à une température comprise entre 15 et 25 °C.

La teneur en protéines est dosée par la méthode de Bradford, exprimée en mg protéines/l. Le dosage utilisé de l'élimination des protéines est effectué par la détermination de la teneur en azote protéique dans les vins (Méthode de Bradford, Bradford MM, Anal. Biochem., 1976, 72, 248-254). La méthode de Bradford consiste à faire réagir un échantillon de moût avec un réactif le réactif de bradford. Le protocole se déroule en 2 étapes : dans un premier temps, on mélange 10 mL de moût ou de vin avec 10 mL d'acétone. On refroidit ce mélange à -20°C pendant 30 min. Ce mélange est ensuite centrifugé à 4000 rpm environ pendant 10 min. Puis on sépare l'acétone, et on redissout le précipité avec 1 ml de soude 0,1 M et 4 ml de réactif de Bradford. On ajuste ce mélange à 10 ml avec de l'eau distillée. Après 15 min, on lit l'absorbance à 595 nm contre un blanc contenant 1 ml de soude 0,1 M, 4 ml de réactif de Bradford et 5 ml d'eau distillée. La concentration obtenue est exprimée en mg équivalent d'albumine sérum bovine/l.

La teneur en composés polyphénoliques totaux (CPT) est déterminée par la méthode de Folin-Ciocalteu, exprimée en mg d'équivalent d'acide gallique (mg éq GAE/l). L'analyse des composés polyphénoliques totaux est effectuée selon la méthode décrite dans « Singleton VL, Drapper DE, The transfer of phenolic compounds from grapes seeds into wine, J. Enol. Vitic. 1964, 15, 131-145 ». La méthode de Folin-Ciocalteu est basée sur une réaction colorimétrique dont la réponse dépend des composés phénoliques présents dans les extraits phénoliques analysés. Le développement de la coloration dépend du nombre de groupes hydroxyles ou de groupement potentiellement oxydable. Les groupements phénoliques doivent être sous forme phénolate pour entraîner l'oxydation des anions phospho-tungtisques et phospho-molibdiques présents dans le réactif. Pratiquement, 200 μl de vin rouge dilué 5 fois, ou 200 μl de vin blanc sont introduits dans une fiole de 20 ml. 1 ml de réactif de Folin-Ciocalteu, 12 ml d'eau distillée et 4 ml de $Na_2CO_3$ (à 20%) sont ajoutés. On ajuste au trait de jauge avec de l'eau distillée. L'absorbance est déterminée après 30 min au spectro otomètre à 765 nm, la teneur en composés phénoliques totaux étant calculée par rapport à une droite de calibration réalisée avec l'acide gallique.

| Variation | Vin rouge | | | Vin blanc | | |
|---|---|---|---|---|---|---|
| | Turbidité % | Protéines % | CPT % | Turbidité % | Protéines % | CPT % |
| Témoin | 3670 NTU | 184 mg/l | 2341 GAE/l | 130 NTU | 120 mg/l | 280 GAE/l |
| **F1** 50 g/hl | -93% | -91% | -33% | -96% | -83% | -64% |
| **F1** 10 g/hl | -93% | -77% | -41% | -90% | -80% | -55% |
| **F2** 50 g/hl | -89% | -75% | -40% | -97% | -83% | -54% |
| **F2** 10 g/hl | -90% | -66% | -37% | -96% | -86% | -70% |
| *F7 50 g/hl* | -91% | -80% | -27% | -99% | -88% | -33% |
| *F7 10 g/hl* | -90% | -72% | -26% | -98% | -92% | -40% |
| *C1 50g/hl* | -92% | -97% | -33% | -99% | -87% | -34% |
| *C1 10g/hl* | -94% | -74% | -46% | -98% | -86% | -46% |
| *CPT : composés phénoliques totaux ; variation par rapport au témoin ayant subi les mêmes étapes | | | | | | |

Il résulte clairement du tableau 2 que les vins sont stabilisés, sans que la totalité des polyphénols soient éliminée.

<u>**Dans les exemples 2, 3 et 4 suivants**</u>, un vin rouge (exemple 2), un vin blanc (exemple 3), et un vin rosé (exemple 4) ont été traités par ajoût des extraits F4 et C1 à des doses de **10, 50** et **200 g/hl**, avec un temps de contact de 24 heures, avec ou sans agitation douce.

Pour cette étude nous avons utilisé :

- Un vin rouge traditionnel, millésime 2002, contenant les cépages grenache, syrah et carrignan. Ce vin est conditionné en bouteilles de 750 ml. Sa teneur en composés phénoliques totaux est de 1850 mg GAE/l.
- Un vin blanc chardonnay paradoxe blanc, millésime 1999 du domaine de Virginie Castel. Ce vin est conditionné en bouteilles de 750 ml. Ce vin présente la caractéristique d'être vinifié comme un vin rouge incluant une ase de macération et une augmentation de température. Ainsi les teneurs en catéchine, dimères sont très supérieures à celle d'un vin blanc subissant une vinification classique. Sa teneur en composés phénoliques totaux est de 1000 mg GAE/l.
- Un vin rosé traditionnel, millésime 2002. Ce vin est conditionné en bouteilles de 750 ml. Sa teneur en composés phénoliques totaux est de 365 mg GAE/l.

Pour chaque essai, par exemple sur vin rouge, on homogénéise dans un premier temps l'ensemble des bouteilles de 750 ml de vin, puis on les répartit en aliquots de 100 ml. A chacun de ces aliquots on ajoute les composés F4 ou C1, à une dose de 10 g/hl, 50 g/hl ou 200 g/hl avec un temps de contact de 24 heures, avec ou sans agitation douce, à température ambiante.

Dosage utilisé pour le dosage de tanins dans les exemples 2a, 2b, 3a et 3b

Pour la détermination du fractionnement de la matière phénolique est effectué sur colonne, par estimation qualitative de la matière colorante (selon Bourzeix et coll, 1979). Cette estimation s'effectue par fractionnement sur colonne. On sépare 3 fractions. Ces différentes fractions évoluent au cours du vieillissement du vin :

1- Les monomères anthocyanes libres grâce à un mélange méthanol 999 vol et d'HCl 12 N 1 vol. Ces monomères sont recueillis dans 20 ml d'éluat puis on mesure la densité optique à 538 nm afin d'évaluer le taux de cette fraction.

2- Les polymères rouges c'est à dire les formes faiblement condensés grâce à un mélange d'acide formique et d'eau (1/1en vol). Ces polymères rouges sont recueillis dans 20mL d'éluat puis on mesure la densité optique à 525 nm afin d'évaluer le taux de cette fraction.

3- Les polymères jaunes et bruns c'est à dire les formes condensés grâce à de l'acide formique pur. Ces polymères jaunes et bruns sont recueillis dans 20mL d'éluat puis on mesure la densité optique à 525 nm afin d'évaluer le taux de cette fraction.

Dosage utilisé pour le dosage de tanins dans les exemples 2c et 2d

Analyse des tanins du vin (Ribéreau-Gayon P, Glories Y, Maujean A, Dubourdieu D, 1998 Traité d'oenologie 2. chimie du vin stabilisation et traitement, Dunod, Paris p203)

Cette méthode est appelée aussi dosage de tanins, méthode LA ou bien encore méthode de dosage des tanins proanthocyaniques. Elle est basée sur la réaction de Bate-Smith. Le chauffage en milieu acide des procyanidines conduit à la rupture de certaines liaisons et à la formation de carbocations qui se transforment partiellement en cyanidine si le milieu est suffisamment oxydant. Pour cela, le mode opératoire comprend la préparation de deux échantillons contenant chacun 4 ml de vin dilué au 1/50, 2 ml d'eau et 6 ml d'HCl pur (12N) ; l'un des tubes est chauffé au bain-marie à 100°C pendant 30 minutes et on lui ajoute 1 ml d'éthanol 95% pour solubiliser la couleur rouge apparue (D2) ; l'autre n'est pas chauffé, mais reçoit 1 ml d'éthanol 95% (D1). On mesure la différence
$\Delta d = D2-D1$ de la densité optique à 550nm sous 10mm de parcours optique ; par comparaison avec une solution d'oligomères procyanidiques de référence on obtient la concentration :

$$LA\ (g/L) = 19,33\ X\ \Delta d$$

Dosage utilisé pour l'analyse de l'intensité colorante, la teinte, l'éclat et la composition de la couleur du vin dans les exemples 2a, 2b, 2c, 2d, 3a et 3b.

L'analyse de la matière colorante du vin est réalisée selon « Etude de la couleur du vis » (Ribéreau-Gayon P, Glories Y, Maujean A, Dubourdieu D, 1998 Traité d'oenologie 2. chimie du vin stabilisation et traitement , Dunod, Paris p206-207). Cette étude est définie par 4 paramètres :

- *L'intensité colorante* représente l'importance de la couleur.

$$IC = DO\ 420 + DO\ 520 + DO\ 620$$

- *La teinte* correspond au niveau d'évolution de la couleur vers l'orange. Elle augmente au cours du vieillissement du vin.

$$T = DO420 / DO520$$

- *La composition de la couleur* correspond à la contribution sous forme de % de chacune des trois composantes à la couleur globale.

$$DO\ 420\ (\%) = (\ DO\ 420/\ IC\ )\ x\ 100$$

$$DO\ 520\ (\%) = (\ DO\ 420/\ IC\ )\ x\ 100$$

$$DO\ 620\ (\%) = (\ DO\ 420/\ IC\ )\ x\ 100$$

- *L'éclat* est relié à la forme du spectre. Plus la couleur rouge du vin est dominante et brillante plus ce paramètre est élevé.

$$dA(\%) = (1 - (DO\ 420 + DO\ 620\ /\ 2\ x\ DO\ 520))\ X\ 100$$

**EXEMPLE 2- Traitement de vins finis par un extrait de biomasse fongique, ou un extrait de biomasse crustacés : vins rouges**

Cet exemple sert particulièrement à l'illustration des effets suivants:

- Amélioration de la clarté
- Amélioration de la composition de la couleur du vin
- Variation du pH du vin
- Elimination d'une partie des polyphénols
- Conservation de la matière phénolique du vin

**EXEMPLE 2a- Caractéristiques des vins rouges après traitement, sans agitation avec un temps de contact de 24 heures**

**Tableau 3-** Variations de pH et de la teneur en composés phénoliques totaux dans les vins rouges témoins et traités, après ajout des produits F4 et C1 sans agitation, temps de contact 24 hrs

|  |  | Variation * | CPT | Variation |
|---|---|---|---|---|
|  |  | (%) | (mg éq GAE/l) | (%) |
| **Témoin** | 3,75 |  | 1850 |  |
| **F4 10g/hl** | 3,73 | -0,5% | 1799 | -2,74% |
| **F4 50g/hl** | 3,73 | -0,5% | 1784 | -3,56% |
| **F4 200g/hl** | 3,77 | +0,5% | 1697 | -8,22% |
| *C1 10g/hl* | *3,74* | *-0,3%* | *1834* | *-0,82%* |

(suite)

|  |  | Variation * | CPT | Variation |
|---|---|---|---|---|
|  |  | (%) | (mg éq GAE/l) | (%) |
| *C1 50g/hl* | *3,77* | *+0,5%* | *1672* | *-9,59%* |
| *C1 200g/hl* | *3,81* | *+1,6%* | *1672* | *-9,59%* |
| * par rapport au témoin | | | | |

Il résulte clairement du tableau 3 que le pH du vin varie de façon négligeable, et que la totalité des polyphénols est conservée avec une variation négligeable.

**Tableau 4-** Fractionnement de la matière phénolique des vins rouges témoins et traités, après ajout des produits F4 et C1 sans agitation, temps de contact 24 hrs

|  | Monomères | Variation | Polymères rouges | Variation | Polymères bruns | Variation |
|---|---|---|---|---|---|---|
|  | % | % | % | % | % | % |
| Témoin | 37,53 |  | 39,50 |  | 22,96 |  |
| F4 50g/hl | 37,00 | -1,4% | 42,10 | +6,2% | 20,90 | -9,9% |
| F4 200g/hl | 36,44 | -3.0% | 42,85 | +8.0% | 20,70 | -10,8% |
| C1 50g/hl | 36,68 | -2,3% | 40,20 | +1,7% | 23,11 | +0,7% |
| C1 200g/hl | 36,92 | -1,7% | 41,02 | +3,6% | 22,05 | -4,4% |

Il résulte clairement du tableau 4 qu'un réarrangement au profit des polymères rouges est obtenu.

**Tableau 5-** Intensité colorante, teinte et éclat des vins rouges témoins et traités, après ajout des produits F4 et C1 sans agitation, temps de contact 24 hrs

|  | Intensité | Variation | Teinte | Variation | Eclat | Variation |
|---|---|---|---|---|---|---|
|  | colorante | % |  | % |  | % |
| Témoin | 1,06 |  | 1,05 |  | 27,42 |  |
| F4 10g/hl | 0,93 | -12,6% | 0,96 | -8,6% | 31,04 | +13,2% |
| F4 50g/hl | 0,99 | -6,9% | 0,97 | -7,6% | 29,56 | +7,8% |
| F4 200g/hl | 0,89 | -16,4% | 0,94 | -10,5% | 30,96 | +12,9% |
| C1 10g/hl | 0,95 | -10,7% | 0,99 | -5,7% | 30,32 | +10,6% |
| C1 50g/hl | 0,88 | -17,3% | 0,96 | -8,6% | 32,66 | +19,1% |
| C1 200g/hl | 0,87 | -18,2% | 0,95 | -9,5% | 31,19 | +13,8% |

Il résulte clairement du tableau 5 que l'intensité colorante et la teinte diminuent, tandis que l'éclat est amélioré.

**Tableau 6-** Composition de la couleur des vins rouges témoins et traités, après ajout des produits F4 et C1 sans agitation, temps de contact 24 hrs

|  | DO | Variation | DO | Variation | DO | Variation |
|---|---|---|---|---|---|---|
|  | 420 nm | % | 520 nm | % | 620nm | % |
| Témoin | 42,60 |  | 40,80 |  | 16,50 |  |
| F4 10g/hl | 40,64 | -4,6% | 42,03 | +3,0% | 17,32 | +5.0% |
| F4 50g/hl | 40,50 | -4,9% | 41,51 | +1,7% | 17,97 | +8,9% |

(suite)

|  | DO | Variation | DO | Variation | DO | Variation |
|---|---|---|---|---|---|---|
|  | 420 nm | % | 520 nm | % | 620nm | % |
| F4 200g/hl | 39,63 | -7.0% | 42,00 | +2,9% | 18,35 | +11,2% |
| C1 10g/hl | 41,67 | -2,2% | 41,78 | +2,4% | 16,54 | +0,2% |
| C1 50g/hl | 40,90 | -4.0% | 42,61 | +4,4% | 16,47 | -0,2% |
| C1 200g/hl | 40,00 | -6,1% | 42,06 | +3,1% | 17,93 | +8,7% |

Il résulte clairement du tableau 6 qu'un très léger réarrangement de la couleur apparaît : La densité optique à 420 nm (jaune-vert) diminue tandis que la densité optique à 520 nm (pourpre) et la densité optique à 620 nm ( bleu-vert) augmentent.

**EXEMPLE 2b- Caractéristiques des vins rouges après traitement avec agitation douce, avec un temps de contact de 24 heures**

|  |  | Variation* | CPT | Variation* |
|---|---|---|---|---|
|  |  | (%) | (mg éq GAE/l) | (%) |
| Témoin | 3.77 |  | 1850 |  |
| F4 10g/hl | 3.71 | -1.6% | 1807 | -2.3% |
| F4 50g/hl | 3.73 | -1.1% | 1850 | 0% |
| F4 200g/hl | 3.75 | -0.5% | 1744 | -5.7% |
| C1 10g/hl | 3.76 | -0.3% | 1522 | -12.3% |
| C1 50g/hl | 3.78 | +0.3% | 1585 | -14.3% |
| C1 200g/hl | 3.87 | +2.7% | 1585 | -14.3% |
| *par rapport au témoin |  |  |  |  |

Il résulte clairement du tableau 7 que le pH du vin varie de façon négligeable, les polyphénols sont conservés avec une variation négligeable.

**Tableau 8-** Fractionnement de la matière phénolique des vins rouges témoins et traités, après ajout des produits F4 et C1 avec agitation, temps de contact 24 hrs

|  | Monomères | Variation | Polymères rouges | Variation | Polymères bruns | Variation |
|---|---|---|---|---|---|---|
|  | % | % | % | % | % | % |
| Témoin | 39.6 |  | 38.7 |  | 21.6 |  |
| F4 50g/hl | 31.7 | -19.9% | 44.5 | +15.0% | 23.7 | +9.7% |
| F4 200g/hl | 32.3 | -18.5% | 44.8 | +16.0% | 22.9 | +5.7% |
| C1 50g/hl | 37.5 | -5.3% | 47.1 | +21.6% | 15.4 | -29.0% |
| C1 200g/hl | 41.2 | +3.9% | 44.0 | +13.8% | 14.8 | -31.7% |

Il résulte clairement du tableau 8 qu'un réarrangement au profit des polymères rouges est obtenu.

**Tableau 9-** Intensité colorante, teinte et éclat des vins rouges témoins et traités, après ajout des produits F4 et C1 avec agitation, temps de contact 24 hrs

| | Intensité | Variation | Teinte | Variation | Eclat | Variation |
|---|---|---|---|---|---|---|
| | colorante | % | | % | | % |
| **Témoin** | 1.0 | | 1.0 | | 30.4 | |
| **F4 10g/hl** | 0.7 | -26% | 0.9 | -3.0% | 39.0 | +28% |
| **F4 50g/hl** | 0.8 | -23% | 0.9 | -4.1% | 26.8 | -12% |
| **F4 200g/hl** | 0.7 | -34% | 1.0 | +7.2% | 35.6 | +17% |
| **C1 10g/hl** | 0.9 | -15% | 1.0 | +1.0% | 32.9 | +8% |
| **C1 50g/hl** | 0.8 | -25% | 0.9 | -4.1% | 35.1 | +15% |
| **C1 200g/hl** | 0.8 | -18% | 1.1 | +10.3% | 29.2 | -4% |

Il résulte clairement du tableau 9 que l'intensité colorante diminue, et que la teinte est stable, tandis que l'éclat est amélioré.

**Tableau 10-** Composition de la couleur des vins rouges témoins et traités, après ajout des produits F4 et C1 avec agitation, temps de contact 24 hrs : densité optique aux longueurs d'onde d'absorption 420, 520 et 620 nm

| | DO | Variation | DO | Variation | DO | Variation |
|---|---|---|---|---|---|---|
| | **420 nm** | % | **520 nm** | % | **620nm** | % |
| **Témoin** | 40.7 | | 41.8 | | 17.9 | |
| **F4 10g/hl** | 42.3 | +3.9% | 45.0 | +7.6% | 12.7 | -29.2% |
| **F4 50g/hl** | 38.1 | -6.4% | 40.6 | -3.0% | 21.3 | +19.3% |
| **F4 200g/hl** | 45.5 | +11.8% | 43.7 | +4.5% | 10.7 | -39.9% |
| **C1 10g/hl** | 41.9 | +3.0% | 42.7 | +2.0% | 15.4 | -13.9% |
| **C1 50g/hl** | 40.6 | -0.3% | 43.5 | +4.0% | 15.9 | -11.0% |
| **C1 200g/hl** | 44.3 | +8.8% | 41.4 | -1.0% | 14.3 | -20.0% |

Il résulte clairement du tableau 10 qu'un très léger réarrangement de la couleur apparaît : La densité optique à 420 nm (jaune-vert) augmente, la densité optique à 520 nm (pourpre) augmente, et la densité optique à 620 nm ( bleu-vert) diminue..

**EXEMPLE 3- Traitement de vins finis par un extrait de biomasse fongique, ou un extrait de biomasse crustacés : vins blancs**

**EXEMPLE 3a- Traitement du vin blanc sans agitation, avec un temps de contact de 24 heures**

**Tableau 11-** Variations de pH et de la teneur en composés phénoliques totaux dans les vins blancs témoins et traités, après ajout des produits F4 et C1 sans agitation, temps de contact 24 hrs

| | | Variation | CPT | Variation |
|---|---|---|---|---|
| | | (%) | (mg éq GAE/l) | (%) |
| **Témoin** | 3.65 | | 1000 | |
| **F4 10g/hl** | 3.77 | +3.3% | 1000 | 0% |
| **F4 50g/hl** | 3.77 | +3.3% | 975 | -2.5% |
| **F4 200g/hl** | 3.79 | +3.8% | 975 | -2.5% |

(suite)

| | | Variation | CPT | Variation |
|---|---|---|---|---|
| | | (%) | (mg éq GAE/l) | (%) |
| *C1 10g/hl* | *3.79* | *+3.8%* | *1000* | *0%* |
| *C1 50g/hl* | *3.84* | *+5.2%* | *1000* | *0%* |
| *C1 200g/hl* | *3.97* | *+8.8%* | *910* | *-9.0%* |

Il résulte clairement du tableau 11 que le pH du vin varie de façon négligeable, et que les polyphénols sont conservés avec une variation négligeable.

**Tableau 12-** Intensité colorante, teinte et teneur en tanins des vins blancs témoins et traités, après ajout des produits F4 et C1 sans agitation, temps de contact 24 hrs

| | Intensité | Variation | Teinte | Variation | Tanins | Variation |
|---|---|---|---|---|---|---|
| | colorante | % | | % | (g/l) | % |
| **Témoin** | 0.58 | | 3.3 | | 1.23 | |
| **F4 10g/hl** | 0.46 | -20.7% | 4.1 | +25.5% | 1.17 | -8.6% |
| **F4 50g/hl** | 0.44 | -24.1% | 3.9 | +20.6% | 1.17 | -5.6% |
| **F4 200g/hl** | 0.43 | -25.9% | 3.9 | +20.3% | 1.19 | -7.0% |
| **C1 10g/hl** | 0.45 | -22.4% | 3.9 | +21.2% | 1.08 | -15.6% |
| **C1 50g/hl** | 0.40 | -31.0% | 4.3 | +31.6% | 1.12 | -12.5% |
| **C1 200g/hl** | 0.49 | -15.5% | 3.2 | -0.6% | 1.14 | -10.9% |

Il résulte clairement du tableau 12 que l'intensité colorante diminue, la teinte augmente, tandis que la totalité des tanins est conservée avec une variation négligeable.

**Tableau 13-** Composition de la couleur des vins blancs témoins et traités, après ajout des produits F4 et C1 sans agitation, temps de contact 24 hrs : densité optique aux longueurs d'onde d'absorption 420, 520 et 620 nm

| | DO | Variation | DO | Variation | DO | Variation |
|---|---|---|---|---|---|---|
| | 420 nm | % | 520 nm | % | 620nm | % |
| **Témoin** | 70.7 | | 21.7 | | 7.6 | |
| **F4 10g/hl** | 76.5 | +8.2% | 18.7 | -13.9% | 4.8 | -37.1% |
| **F4 50g/hl** | 76.5 | +8.2% | 19.5 | -10.3% | 4.0 | -47.1% |
| **F4 200g/hl** | 76.0 | +7.5% | 19.3 | -10.8% | 4.6 | -39.5% |
| **C1 10g/hl** | 76.4 | +8.1% | 19.3 | -10.9% | 4.2 | -44.5% |
| **C1 50g/hl** | 78.1 | +10.5% | 18.2 | -16.2% | 3.7 | -51.6% |
| **C1 200g/hl** | 70.9 | +0.2% | 21.9 | +0.7% | 7.3 | -4.2% |

Il résulte clairement du tableau 13 qu'un très léger réarrangement de la couleur apparaît : La densité optique à 420 nm (jaune-vert) augmente, la densité optique à 520 nm (pourpre) et à 620 nm ( bleu-vert) diminuent.

**EXEMPLE 3b- Traitement du vin blanc avec agitation douce, avec un temps de contact de 24 heures**

**Tableau 14-** Variations de pH et de la teneur en composés phénoliques totaux dans les vins blancs témoins et traités, après ajout des produits F4 et C1 avec agitation, temps de contact 24 hrs

|  |  | Variation | CPT | Variation |
|---|---|---|---|---|
|  |  | (%) | (mg éq GAE/l) | (%) |
| Témoin | 3.73 |  | 1000 |  |
| F4 10g/hl | 3.76 | +0.8% | 909 | -9.1% |
| F4 50g/hl | 3.77 | +1.0% | 909 | -9.1% |
| F4 200g/hl | 3.81 | +2.1% | 873 | -12.7% |
| *C1 10g/hl* | *3.77* | *+1.1%* | *873* | *-12.7%* |
| *C1 50g/hl* | *3.80* | *+1.9%* | *862* | *-13.8%* |
| *C1 200g/hl* | *3.98* | *+6.7%* | *850* | *-15.0%* |

Il résulte clairement du tableau 14 que le pH du vin varie de façon négligeable, et que la totalité des polyphénols est conservée avec une variation négligeable.

**Tableau 15-** Intensité colorante, teinte et teneur en tanins des vins blancs témoins et traités, après ajout des produits F4 et C1 avec agitation, temps de contact 24 hrs

|  | Intensité | Variation | Teinte | Variation | Tanins | Variation |
|---|---|---|---|---|---|---|
|  | colorante | % |  | % | (g/l) | % |
| Témoin | 0.54 |  | 3.4 |  | 1.28 |  |
| F4 10g/hl | 0.56 | +3.7% | 3.3 | -3.5% | 0.94 | -26.6% |
| F4 50g/hl | 0.53 | -1.9% | 3.2 | -5.0% | 0.90 | -29.7% |
| F4 200g/hl | 0.49 | -9.3% | 3.3 | -2.9% | 0.96 | -25.0% |
| *C1 10g/hl* | *0.52* | *-3.7%* | *3.2* | *-5.9%* | *1.00* | *-21.9%* |
| *C1 50g/hl* | *0.51* | *-5.6%* | *3.2* | *-6.8%* | *0.81* | *-36.7%* |
| *C1 200g/hl* | *1.09* | *+102%* | *2.2* | *-35.3%* | *0.77* | *-39.8%* |

Il résulte clairement du tableau 15 que l'intensité colorante diminue, que la teinte diminue, tandis que la totalité des tanins diminue légèrement.

**Tableau 16-** Composition de la couleur des vins blancs témoins et traités, après ajout des produits F4 et C1 avec agitation, temps de contact 24 hrs : densité optique aux longueurs d'onde d'absorption 420, 520 et 620 nm

|  | DO | Variation | DO | Variation | DO | Variation |
|---|---|---|---|---|---|---|
|  | 420 nm | % | 520 nm | % | 620nm | % |
| Témoin | 71.8 |  | 21.1 |  | 7.1 |  |
| F4 10g/hl | 70.4 | -1.9% | 21.4 | +1.4% | 8.1 | +14.7% |
| F4 50g/hl | 70.4 | -1.9% | 21.7 | +2.9% | 7.8 | +9.9% |
| F4 200g/hl | 71.8 | +0.1% | 21.7 | +2.9% | 6.4 | -9.4% |
| *C1 10g/hl* | *72.0* | *+0.3%* | *22.5* | *+6.4%* | *5.5* | *-22.3%* |
| *C1 50g/hl* | *69.8* | *-2.8%* | *22.0* | *+4.0%* | *8.2* | *+15.9%* |
| *C1 200g/hl* | *59.2* | *-17.5%* | *26.9* | *+27.2%* | *13.9* | *+96.2%* |

Il résulte clairement du tableau 16 qu'un très léger réarrangement de la couleur apparaît : la densité optique à 420 nm (jaune-vert) diminue, et la densité optique à 520 nm (pourpre) et 620 nm (bleu-vert) augmentent.

**EXEMPLE 4- Traitement de vins finis par un extrait de biomasse fongique, ou un extrait de biomasse crustacés : vins rosés**

**EXEMPLE 4a- Traitement du vin rosé sans agitation, avec un temps de contact de 24 heures**

**Tableau 17-** Variations de pH et de la teneur en composés phénoliques totaux dans les vins rosés témoins et traités, après ajout des produits F4 et C1 sans agitation, temps de contact 24 hrs

|  |  | Variation | CPT | Variation |
|---|---|---|---|---|
|  |  | (%) | (mg éq GAE/l) | (%) |
| Témoin | 3.55 |  | 365 |  |
| F4 10g/hl | 3.55 | +0.0% | 347 | -4.9% |
| F4 50g/hl | 3.56 | +0.3% | 365 | +0.0% |
| F4 200g/hl | 3.60 | +1.4% | 350 | -4.1% |
| *C1 10g/hl* | *3.55* | *+0.0%* | *342* | *-6.3%* |
| *C1 50g/hl* | *3.56* | *+0.3%* | *350* | *-4.1%* |
| *C1 200g/hl* | *3.60* | *+1.4%* | *325* | *-11.0%* |

Il résulte clairement du tableau 17 que le pH du vin varie de façon négligeable, la totalité des polyphénols est conservée avec une variation négligeable.

**Tableau 18-** Fractionnement de la matière phénolique des vins rosés témoins et traités, après ajout des produits F4 et C1 sans agitation, temps de contact 24 hrs

|  | Monomères | Variation | Polymères rouges | Variation | Polymères bruns | Variation |
|---|---|---|---|---|---|---|
|  | % | % | % | % | % | % |
| Témoin | 52.5 |  | 43.6 |  | 4.0 |  |
| F4 50g/hl | 58.7 | +11.8% | 36.4 | -16.5% | 5.0 | +25.3% |
| F4 200g/hl | 27.3 | +9.1% | 38.5 | -11.7% | 4.3 | +7.8% |
| *C1 50g/hl* | *44.4* | *-15.4%* | *40.2* | *-7.8%* | *15.4* | *+288%* |
| *C1 200g/hl* | *45.7* | *-12.8%* | *41.1* | *-5.7%* | *13.2* | *+232%* |

Il résulte clairement du tableau 18 qu'un réarrangement au profit des monomères et des polymères bruns est obtenu.

**Tableau 19-** Intensité colorante, teinte et éclat des vins rosés témoins et traités, après ajout des produits F4 et C1 sans agitation, temps de contact 24 hrs

|  | Intensité | Variation | Teinte | Variation | Eclat | Variation |
|---|---|---|---|---|---|---|
|  | colorante | % |  | % |  | % |
| Témoin | 0.13 |  | 1.0 |  | 40.8 |  |
| F4 10g/hl | 0.14 | +7.7% | 1.0 | +1.0% | 39.4 | -3.6% |
| F4 50g/hl | 0.15 | +15.4% | 1.1 | +3.9% | 35.8 | -12.3% |
| F4 200g/hl | 0.12 | -7.7% | 1.0 | +1.0% | 40.5 | -0.7% |
| *C1 10g/hl* | *0.13* | *+0.0%* | *1.1* | *+1.9%* | *40.1* | *-1.7%* |
| *C1 50g/hl* | *0.12* | *-7.7%* | *1.0* | *+1.0%* | *41.2* | *+1.0%* |

(suite)

| | Intensité | Variation | Teinte | Variation | Eclat | Variation |
|---|---|---|---|---|---|---|
| | colorante | % | | % | | % |
| *C1 200g/hl* | *0.37* | *+185%* | *1.3* | *+26.2%* | *13.1* | *-67.9%* |

Il résulte clairement du tableau 19 que l'intensité colorante diminue, que la teinte est stable ainsi que l'éclat.

**Tableau 20-** Composition de la couleur des vins rosés témoins et traités, après ajout des produits F4 et C1 sans agitation, temps de contact 24 hrs

| | DO | Variation | DO | Variation | DO | Variation |
|---|---|---|---|---|---|---|
| | 420 nm | % | 520 nm | % | 620nm | % |
| Témoin | 52.5 | | 43.5 | | 3.9 | |
| F4 10g/hl | 47.1 | -10.3% | 45.1 | +3.7% | 7.7 | +97% |
| F4 50g/hl | 46.7 | -11.1% | 43.7 | +0.5% | 9.5 | +144% |
| F4 200g/hl | 47.7 | -9.2% | 45.6 | +4.8% | 6.7 | +70.5% |
| *C1 10g/hl* | *47.9* | *-8.8%* | *45.5* | *+4.6%* | *6.5* | *+67%* |
| *C1 50g/hl* | *48.1* | *-8.4%* | *45.9* | *+5.5%* | *6.0* | *+54%* |
| *C1 200g/hl* | *47.7* | *-9.1%* | *36.5* | *-16.1%* | *15.7* | *+303%* |

Il résulte clairement du tableau 20 qu'un très léger réarrangement de la couleur apparaît : La densité optique à 420 nm (jaune-vert) diminue, et la densité optique à 520 nm (pourpre) et à 620 nm ( bleu-vert) augmentent.

**EXEMPLE 4b- Traitement du vin rosé avec agitation douce, avec temps de contact de 24 heures**

**Tableau 21-** Variations de pH et de la teneur en composés phénoliques totaux dans les vins rosés témoins et traités, après ajout des produits F4 et C1 avec agitation, temps de contact 24 hrs

| | | Variation | CPT | Variation |
|---|---|---|---|---|
| | | (%) | (mg éq GAE/l) | (%) |
| Témoin | 3.54 | | 365 | |
| F4 10g/hl | 3.51 | -0.9% | 255 | -30.0% |
| F4 50g/hl | 3.50 | -1.1% | 269 | -26.3% |
| F4 200g/hl | 3.56 | +0.6% | 237 | -34.9% |
| *C1 10g/hl* | *3.55* | *+0.3%* | *309* | *-15.2%* |
| *C1 50g/hl* | *3.59* | *+1.4%* | *324* | *-11.1%* |
| *C1 200g/hl* | *3.71* | *+4.8%* | *279* | *-23.3%* |

Il résulte clairement du tableau 21 que le pH du vin varie de façon négligeable, la totalité des polyphénols est conservée avec une variation négligeable.

**Tableau 22-** Fractionnement de la matière phénolique des vins rosés témoins et traités, après ajout des produits F4 et C1 avec agitation, temps de contact 24 hrs

|  | Monomères | Variation | Polymères rouges | Variation |
|---|---|---|---|---|
|  | % | % | % | % |
| Témoin | 61.1 |  | 38.9 |  |
| F4 50g/hl | 57.1 | -6,4% | 42.9 | +10.1% |
| F4 200g/hl | 57.5 | -5.9% | 42.1 | 8.0% |
| C1 50g/hl | 63.6 | +4.1% | 36.4 | -6.4% |
| C1 200g/hl | 65.9 | +7.9% | 34.1 | -12.4% |

Il résulte clairement du tableau 22 qu'un réarrangement au profit des polymères rouges est obtenu.

**Tableau 23-** Intensité colorante, teinte et éclat des vins rosés témoins et traités, après ajout des produits F4 et C1 avec agitation, temps de contact 24 hrs

|  | Intensité | Variation | Teinte | Variation | Eclat | Variation |
|---|---|---|---|---|---|---|
|  | colorante | % |  | % |  | % |
| Témoin | 0.12 |  | 0.99 |  | 99.9 |  |
| F4 10g/hl | 0.14 | +16.7% | 1.02 | +3.0% | 99.9 | -0.0 |
| F4 50g/hl | 0.14 | +16.7% | 1.01 | +2.0% | 99.9 | -0.0 |
| F4 200g/hl | 0.12 | +0.0% | 1.00 | +1.0% | 99.9 | -0.0 |
| C1 10g/hl | 0.13 | +8.3% | 1.03 | +4.0% | 99.9 | -0.0 |
| C1 50g/hl | 0.11 | -8.3% | 1.01 | +2.0% | 99.9 | +0.0 |
| C1 200g/hl | 0.16 | +33.3% | 1.10 | +11.1% | 99.9 | -0.0 |

Il résulte clairement du tableau 23 que l'intensité colorante augmente, que la teinte est stable ainsi que l'éclat.

**Tableau 24- Composition** de la couleur des vins rosés témoins et traités, après ajout des produits F4 et C1 avec agitation, temps de contact 24 hrs

|  | DO | Variation | DO | Variation | DO | Variation |
|---|---|---|---|---|---|---|
|  | 420 nm | % | 520 nm | % | 620nm | % |
| Témoin | 46.6 |  | 47.2 |  | +6.2 |  |
| F4 10g/hl | 46.0 | -1.2% | 44.7 | -5.3% | +9.3 | +49.5% |
| F4 50g/hl | 45.9 | -1.3% | 45.2 | -4.2% | +8.8 | +42.2% |
| F4 200g/hl | 46.7 | +0.3% | 46.3 | -2.0% | +7.0 | +12.6% |
| C1 10g/hl | 46.9 | +0.7% | 45.4 | -3.8% | +7.7 | +23.4% |
| C1 50g/hl | 46.6 | +0.2% | 46.1 | -2.3% | +7.2 | +16.6% |
| C1 200g/hl | 46.8 | +0.5% | 42.2 | -10.6% | +11.0 | +76.8% |

Il résulte clairement du tableau 24 qu'un très léger réarrangement de la couleur apparaît : la densité optique à 420 nm (jaune-vert) est stable, la densité optique à 520 nm (pourpre) diminue, et la densité optique à 620 nm ( bleu-vert) augmente.

**Dans les exemples 5 et 6**, la teneur en métaux lourds et métaux majeurs a été effectuée par spectrométrie d'absorption atomique

Pour ces études il a été utilisé :

- Un vin de pays rouge cépage merlot, millésime 2003, du domaine La Lande Pennautier (Aude). Le raisin a subit une macération mais a été ni collé ni filtré. Sa teneur en composés phénoliques totaux est de 2075 mg GAE/l. Ce vin est conditionné en bouteilles de 750 ml.
- Un vin de pays blanc cépage chardonnay, millésime 2003, du domaine La Lande Pennautier (Aude). Le raisin a subit un pressurage direct puis une vinification à basse température à 20°C. Sa teneur en composés phénoliques totaux est de 273,3 mg GAE/l. Ce vin est conditionné en bouteilles de 750 ml.
- Un vin doux naturel cépages grenache et macabeu, millésime 2003, de la cave coopérative de Baixas (Pyrénées Orientales). Le raisin a subit un pressurage direct, un collage à l'aide de bentonite grainette puis un mutage à l'alcool pur 96% vol sur moût et enfin un collage déprotéinisant et une centrifugation. Sa teneur en composés phénoliques totaux est de 370,8 mg GAE/l. Ce vin est conditionné en bouteilles de 750 ml.

La méthode de dosage utilisée pour l'analyse de l'élimination des métaux lourds (plomb, cadmium) et majeurs (fer) dans les exemples 5 et 6 est : « Détermination de la teneur en minéraux des différents essais » (selon la méthode officielle de l'OIV : Recueil des méthodes internationales d'analyses du vin et des moûts p217-224, p227-228, p231-234). La teneur en cuivre et en fer a été déterminée par spectrométrie d'absorption atomique (SAA) de flamme. La teneur en cadmium, et en plomb a été déterminée par spectrométrie d'absorption atomique (SAA) de four.

### EXEMPLE 5- Elimination des métaux lourds (plomb, cadmium) dans les vins rouge, blanc et doux naturel

Les vins rouge, blanc et doux naturel ont été artificiellement contaminés avec des métaux lourds plomb à 500 $\mu$g/L et cadmium à 20 $\mu$g/L simultanément). Les extraits F1, F2, F7 ou C1 sont mis en contact avec les vins aux doses de 10, 50, ou 200 g/hl. Les teneurs en métaux dans les vins témoins et dans les vins traités sont déterminées par spectrométrie d'absorption atomique en four gra ite.

Pour rappel, les recommandation de l'OIV quant aux teneurs maximales en métaux lourds dans les vins sont 200 $\mu$g/l pour le plomb, 10 $\mu$g/l pour le cadmium.

**Tableau 25-** Elimination des métaux lourds (plomb et cadmium) dans les vins rouge, blanc et doux

| | | Plomb ($\mu$g/l) | | | Cadmium ($\mu$g/l) | | |
|---|---|---|---|---|---|---|---|
| | | Rouge | Blanc | Doux | Rouge | Blanc | Doux |
| Teneur initiale ($\mu$g/l) | | 150 | 111 | 110 | 19 | 18 | 10 |
| F1 | 200 g/hl | 33% | 58% | 38% | 54% | 17% | 25% |
| F1 | 50 g/hl | 31% | 29% | 26% | 56% | 12% | 12% |
| F1 | 10 g/hl | 21% | 10% | 32% | 57% | 18% | 13% |
| F2 | 200 g/hl | 51% | 50% | - | 21% | 17% | 17% |
| F2 | 50 g/hl | 41% | 44% | 15% | 27% | 23% | 17% |
| F2 | 10 g/hl | 41% | 27% | 42% | 14% | 19% | 21% |
| *F7* | *200 g/hl* | *74%* | *65%* | *84%* | *25%* | *8%* | *17%* |
| *F7* | *50 g/hl* | *66%* | *52%* | *54%* | *29%* | *5%* | *23%* |
| *F7* | *10 g/hl* | *37%* | *43%* | *47%* | *26%* | *11%* | *6%* |
| *C1* | *200 g/hl* | *40%* | *73%* | *88%* | *32%* | *38%* | *17%* |
| *C1* | *50 g/hl* | *32%* | *78%* | *78%* | *21%* | *38%* | *43%* |
| *C1* | *10 g/hl* | *17%* | *50%* | *0%* | *11%* | *38%* | *19%* |

Il résulte clairement du tableau 25 que le plomb et le cadmium sont éliminés jusqu'à 50% pour le plomb et 57% pour le cadmium.

**EXEMPLE 6- Utilisation des extraits fongiques selon la présente invention pour éviter les casses dûes à la présence de fer dans les vins rouges, blancs et doux**

Les vins rouge, blanc et doux naturel ont été artificiellement contaminés avec du fer à 20 mg/L. Les extraits F1, F2, F7 ou C1 sont mis en contact avec les vins aux doses de 10, 50, ou 200 g/hl. La teneur en fer dans les vins témoins et dans les vins traités sont déterminées par spectrométrie d'absorption atomique de flamme.

**Tableau 26-** Elimination du fer dans les vins rouges, blancs et doux

|  |  | Vin rouge | Vin blanc | Vin doux |
|---|---|---|---|---|
| **Teneur initiale en fer (mg/l)** |  | 23 | 6 | 5 |
| **F1** | 200 g/hl | 73% | 32% | 77% |
| **F1** | 50 g/hl | 72% | 22% | 42% |
| **F1** | 10 g/hl | 70% | 20% | 23% |
| **F2** | 200 g/hl | 80% | 34% | 51% |
| **F2** | 50 g/hl | 72% | 16% | 24% |
| **F2** | 10 g/hl | 71% | 24% | 10% |
| *F7* | *200 g/hl* | *90%* | *91%* | *98%* |
| *F7* | *50 g/hl* | *86%* | *54%* | *90%* |
| *F7* | *10 g/hl* | *75%* | *20%* | *59%* |
| *C1* | *200 g/hl* | *91%* | *80%* | *94%* |
| *C1* | *50 g/hl* | *77%* | *60%* | *88%* |
| *C1* | *10 g/hl* | *73%* | *25%* | *59%* |

Il résulte clairement du tableau 26 que le fer est éliminé jusqu'à 80%.

**EXEMPLE 7- Elimination des mycotoxines dans les vins rouges, blancs et vins doux naturels**

Pour cette étude , des vins rouge, blanc, et doux identiques à ceux des exemples 5 et 6 ont été utilisés. Ces vins rouge, blanc et doux naturel ont été artificiellement contaminés avec de l'ochratoxine A (OTA) à une dose de 5 $\mu$g/l. Les extraits F1, F2, F7 ou C1 sont mis en contact avec les vins à la doses de 500 g/hl. Pour rappel, l'OIV recommande de ne pas dépasser une teneur en ochratoxine A de 2 $\mu$g/l dans les vins. Aucun traitement spécifique n'a été reconnu jusqu'à présent.

Les teneurs en ochratoxine A dans les vins témoins et dans les vins traités sont déterminées par la méthode officielle de l'OIV (résolution Oeno 16/2001). Le dosage est effectué en calculant la teneur en OTA par le dosage de l'ochratoxine A dans le vin après passage sur une colonne d'immunoaffinité et HPLC avec détection fluorimétrique, selon « Determination of ochratoxin A in wine by means of immunoaffinity column clean-up and high-performance liquid chromatogra y. » A. Visconti, M. Pascale, G. Centonze. Journal of Chromatogra y A, 864 (1999) 89-101.

**Tableau 27**- Elimination des mycotoxines dans les vins rouges, blancs et vins doux naturels, à différents pH

|  |  | Vin rouge | | | Vin blanc | | | Vin doux naturel | |
|---|---|---|---|---|---|---|---|---|---|
|  | pH | OTA ($\mu$g/l) | % |  | OTA ($\mu$g/l) | % | pH | OTA ($\mu$g/l) | % |
| **Témoin** |  | 3.0 |  |  | 4.5 |  |  | 4.6 |  |
| **F1** | 3,11 | 1.4 | 53% | 3,08 | 2.0 | 56% | 3,14 | 2.5 | 46% |
|  | 4,09 | 1.3 | 57% | 3,78 | 1.6 | 65% | 4,04 | 2.6 | 43% |
|  | 4,39 | 1.5 | 50% | 4,25 | 2.5 | 45% | 4,39 | 2.5 | 46% |
| **F2** | 3,08 | 0.8 | 73% | 3,07 | 1.4 | 69% | 3,09 | 2.3 | 50% |
|  | 4,10 | 1.0 | 67% | 3,79 | 2.1 | 53% | 4,03 | 3.0 | 35% |

(suite)

|  | Vin rouge | | | Vin blanc | | | Vin doux naturel | | |
|---|---|---|---|---|---|---|---|---|---|
|  | pH | OTA (μg/l) | % |  | OTA (μg/l) | % | pH | OTA (μg/l) | % |
|  | 4,39 | 1.1 | 63% | 4,34 | 2.2 | 51% | 4,35 | 2.3 | 50% |
| F7 | 3.51 | 1.0 | 66% | 3.54 | 2.6 | 42% | 3.61 | 3.8 | 17% |
|  | 4.52 | 0.5 | 83% | 4.22 | 2.1 | 53% | 4,61 | 3.4 | 26% |
|  | 4.82 | 0.6 | 80% | 4.72 | 1.9 | 58% | 4,92 | 3.5 | 24% |
| C1 | 3.55 | 0.9 | 70% | 3.45 | 3.8 | 16% | 3.70 | 4.2 | 9% |
|  | 4.55 | 1.1 | 63% | 4.20 | 3.3 | 27% | 4,61 | 2.7 | 41% |
|  | 4.70 | 0.9 | 70% | 4.58 | 4.0 | 11% | 4,90 | 4.3 | 7% |

Il résulte clairement du tableau 27 que l'ochratoxine A est éliminée jusqu'à 73%. La quantité de mycotoxines est alors en dessous des recommandations pour les vins rouge et blanc.

**EXEMPLE 8- Clarification des moûts de vin rouge par F1 à la dose de 50 g/hl, par rapport à un témoin ayant subi une décantation naturelle (cuve de 10 l)**

Un moût de la cave A (cuve de 10 l) et un moût de la cave B (cuve de 10 l) ont été traités par ajout d'extrait fongique F1. Cet extrait est ajouté à la fin de la fermentation alcoolique à la dose de 50 g/hl. Le moût témoin est clarifié par décantation naturelle.

Les analyses classiques de sucre, TAV, acidité totale (Ac. T), acidité volatile (Ac. V), $SO_2$ total ($SO_2T$), $SO_2$ volatil ($SO_2L$)) ainsi que le pH et la turbidité sont effectuées.

Résultats :

**Tableau 28-** Variation de la turbidité des moûts et des vins rouges issus du moût de la cave A (cuve de 10 l)

|  | Turbidité (NTU) | Variation (%) |
|---|---|---|
| Moût départ témoin | 1655 |  |
| Vin témoin | 1655 | 0,0% |
| Vin traité - F1 50 g/hl | 25 | 98,5% |

**Tableau 29-** Caractéristiques analytiques des moûts et des vins rouges issus du moût de la cave A (cuve de 10 l)

|  | Sucre (g/L) | TAV (%vol) | Ac.T (g/L $H_2SO_4$) | Ac.V (g/L $H_2SO_4$) | $SO_2T$ (mg/L) | $SO_2L$ (mg/L) | pH |
|---|---|---|---|---|---|---|---|
| Moût départ | 198,0 | 0,05 | 2,82 | 0,05 | 18 | 3 | 3,43 |
| Vin Témoin | 3,1 | 13,23 | 4,44 | 0,27 | 30 | 2 | 3,24 |
| Vin traité - F1 50 g/hl | 3,6 | 13,24 | 4,50 | 0,24 | 28 | 2 | 3,25 |

**Tableau 30-** Variation de la turbidité des moûts et des vins rouges issus du moût de la cave B (cuve de 10 l)

|  | Turbidité (NTU) | Variation (%) |
|---|---|---|
| Moût départ témoin | 3048 |  |

(suite)

| | Turbidité (NTU) | Variation (%) |
|---|---|---|
| **Vin témoin** | 2332 | 23,4% |
| **Vin traité - F1 50g/hl** | 749 | 75,4% |

**Tableau 31-** Caractéristiques analytiques des moûts et des vins rouges issus du moût de la cave B (cuve de 10 l)

| | Sucre (g/L) | TAV (%vol) | Ac.T (g/L $H_2SO_4$) | Ac.V (g/L $H_2SO_4$) | $SO_2T$ (mg/L) | $SO_2L$ (mg/L) | pH |
|---|---|---|---|---|---|---|---|
| **Moût départ témoin** | 195,0 | 0,05 | 2,82 | 0,05 | 18 | 3 | 3,43 |
| **Vin témoin** | 4,0 | 12,86 | 3,99 | 0,34 | 47 | 2 | 3,39 |
| **Vin traité - F1 50g/hl** | 3,9 | 12,89 | 4,09 | 0,37 | 51 | 2 | 3,43 |

Le traitement par le chitine-glucan F1 contribue à l'amélioration de la clarification des vins rouges, sans altération de la teneur en composés phénoliques totaux et tanins, par rapport au vin témoin ayant subi une décantation naturelle.

**EXEMPLE 9- Clarification des moûts de vin doux naturel en mauvais état sanitaire par F1 à la dose de 50 g/hl, par rapport à un témoin ayant subi un collage traditionnel (gélatine/bentonite)**

Un moût de vin doux naturel en mauvais état sanitaire du vignoble D (cuve de 3 hl) a été traité par ajout d'extrait fongique F1 avant débourbage (avant fermentation alcoolique), à la dose de 50 g/hl. Le vin témoin a subit une clarification avec les produits traditionnels, gélatine et bentonite.

Résultats :

**Tableau 32-** Variation de la turbidité (cuve de 3 hl, mauvais état sanitaire)

| | Turbidité (NTU) | Variation (%) |
|---|---|---|
| **Moût départ témoin** | 333,5 | |
| **Vin témoin** | 1,76 | -99,5% |
| **Vin traité - F1 50 g/hl** | 1,66 | -99,5 % |

**Tableau 33-** Caractéristiques analytiques des moûts et des vins doux naturel issus du moût du vignoble D (cuve de 3 hl, mauvais état sanitaire)

| | Sucre (g/L) | TAV (%vol) | Ac.T (g/L $H_2SO_4$) | Ac.V (g/L $H_2SO_4$) | $SO_2T$ (mg/L) | $SO_2L$ (mg/L) | pH |
|---|---|---|---|---|---|---|---|
| **Moût départ témoin** | 267,6 | 0,01 | 1,34 | 0,0 | 13 | 3 | 3,47 |
| **Vin témoin** | 106,0 | 14,86 | 2,76 | 0,43 | 1151 | 400 | 3,75 |
| **Vin traité - F1 50 g/hl** | 94,0 | 16,86 | 2,98 | 0,53 | 140 | 50 | 3,74 |

**Tableau 34-** Composés phénoliques totaux (CPT), tanins et intensité colorante des moûts et des vins doux naturel issus du moût du vignoble D (cuve de 3 hl, mauvais état sanitaire)

|  | CPT (mg éq ac. gallique/l) | Tanins (g/l) | DO 280 |
|---|---|---|---|
| **Moût départ témoin** | 1017,2 | 0,28 | 0,1 |
| **Vin témoin** | 665,3 | 0,20 | 0,1 |
| **Vin traité - F1 50 g/hl** | 753,5 | 0,20 | 0,1 |

L'ajout de F1 engendre une diminution de la turbidité équivalente à celle obtenue après traitement traditionnel (gélatine/bentonite), sans altération de la teneur en composés phénoliques totaux et tanins, ni de intensité colorante.

**EXEMPLE 10- Clarification des moûts de vin doux naturel en bon état sanitaire par F1 à la dose de 50 g/hl, par rapport à un témoin ayant subi un collage traditionnel (gélatine/bentonite)**

Un moût de vin doux naturel en bon état sanitaire du vignoble de D (cuve de 3 hl) a été traité par ajout d'extrait fongique F1 avant débourbage (avant fermentation alcoolique), à la dose de 50 g/hl. Le vin témoin a subit une clarification avec les produits traditionnels gélatine et bentonite.

2- Résultats :

**Tableau 35-** Variation de la turbidité (cuve de 3 hl, bon état sanitaire)

|  | Turbidité (NTU) | Variation (%) |
|---|---|---|
| **Moût départ témoin** | 147,0 | |
| **Vin témoin** | 2,5 | -98,3 % |
| **Vin traité au débourbage - F1 50g/hl** | 3,9 | -97,3 % |
| **Vin traité avant mutage - 50g/hl** | 3,6 | -97,5 % |

**Tableau 36-** Caractéristiques analytiques des moûts et des vins doux naturel issus du moût du vignoble D (cuve de 3 hl , bon état sanitaire)

|  | Sucre (g/L) | TAV (%vol) | Ac.T (g/L $H_2SO_4$) | Ac.V (g/L $H_2SO_4$) | $SO_2T$ (mg/L) | $SO_2L$ (mg/L) | pH |
|---|---|---|---|---|---|---|---|
| **Moût départ témoin** | 212,0 | 0,01 | 2,09 | 0,0 | 18 | 3 | 3,44 |
| **Vin témoin** | 120,0 | 16,86 | 2,82 | 0,64 | 86 | 2 | 3,81 |
| **Vin traité au débourbage - F1 50 g/hl** | 102,0 | 18,37 | 2,75 | 0,58 | 60 | 2 | 3,82 |
| **Vin traité avant mutage - F1 50 g/hl** | 115,0 | 17,54 | 2,77 | 0,62 | 64 | 2 | 3,81 |

**Tableau 37-** Composés phénoliques totaux (CPT), tanins et intensité colorante des moûts et des vins doux naturel issus du moût du vignoble D (cuve de 3 hl, bon état sanitaire)

|  | CPT (mg éq ac. gallique/l) | Tanins (g/l) | DO 280 |
|---|---|---|---|
| **Moût départ témoin** | 790,6 | 0,09 | 0,09 |

(suite)

| | CPT (mg éq ac. gallique/l) | Tanins (g/l) | DO 280 |
|---|---|---|---|
| Vin témoin | 291,3 | 0,05 | 0,07 |
| Vin traité - au débourbage F1 50 g/hl | 280,0 | 0,06 | 0,07 |
| Vin traité avant mutage - F1 50 g/hl | 289,0 | 0,06 | 0,07 |

L'ajout de F1 engendre une diminution de la turbidité équivalente à celle obtenue après traitement traditionnel (gélatine/bentonite), sans altération de la teneur en composés phénoliques totaux et tanins, ni de l'intensité colorante. De plus, l'ajout de F1 au débourbage ou avant le mutage n'a pas d'incidence sur la qualité de la clarification.

**EXEMPLE 11- Clarification des moûts de vin rosés par F1 à la dose de 50 g/hl, par rapport à un témoin ayant subi un collage traditionnel**

Un moût de vin rosé de la cave C (cuve de 300 hl) a été traité par ajout d'extrait fongique F1 après fermentation alcoolique, à la dose de 50 g/hl. Le témoin a subi un collage traditionnel.

Résultats :

Tableau 39- Variation de la turbidité (cuve de 300 hl)

| | Turbidité (NTU) |
|---|---|
| Moût cuve témoin | 1710 |
| Vin témoin | 185 |
| Vin traité - F1 50 g/hl | 82 |

Tableau 40- Caractéristiques analytiques des moûts et des vins rosés issus du moût de C (cuve de 300 hl)

| | Sucre (g/L) | TAV (%vol) | Ac.T (g/L $H_2SO_4$) | Ac.V (g/L $H_2SO_4$) | $SO_2T$ (mg/L) | $SO_2L$ (mg/L) | pH |
|---|---|---|---|---|---|---|---|
| Moût départ témoin | 100 | 0,01 | 1,71 | 0,0 | 11 | 2 | 3,45 |
| Vin témoin | 1,9 | 13,78 | 2,98 | 0,26 | 64 | 2 | 3,55 |
| Moût traité - F1 50 g/hl | 110 | 0,01 | 1,83 | 0,0 | 14 | 2 | 3,44 |
| Vin traité - F1 50 g/hl | 1,7 | 13,37 | 3,01 | 0,23 | 56 | 5 | 3,56 |

Le traitement du moût de vin rosé après fermentation alcoolique par F1 permet de clarifier les moûts de vin rosé de manière aussi efficace que par le collage traditionnel. La teneur en composés phénoliques totaux, la teneur en anthocyanes et la densité optique à 280 nm restent inchangées par rapport au témoin.

**EXEMPLE 12- Elimination des mycotoxines dans les vins rouges naturellement contaminés**

Un vin rouge du vignoble C (cuve de 426 hl) et un vin rouge du vignoble D (cuves de 3 hl) contenant des teneurs en ochratoxine A proches de la teneur maximale recommandées par l'ON (2 µg/l) ont été traités par ajout d'extrait fongique F1. Plusieurs doses de traitement ont été testées : 129 g/hl, 300 g/hl, 400 g/hl et 500 g/hl. L'extrait fongique est laissé en contact avec le vin durant 3 jours. Le vin témoin ne subi aucun traitement.

Résultats :

**Tableau 41-** Elimination des mycotoxines dans le vin rouge C (cuve de 426 hl)

|  | OTA ($\mu$g/l) | Variation (%) |
|---|---|---|
| **Témoin** | 1,7 | - |
| **F1 - 129 g/hl** | 1,4 | -17,6% |

**Tableau 42-** Caractéristiques analytiques du vin rouge C (cuve de 426 hl)

|  | Sucre (g/L) | TAV (%vol) | Ac.T (g/L $H_2SO_4$) | Ac.V (g/L $H_2SO_4$) | $SO_2T$ (mg/L) | $SO_2L$ (mg/L) | pH |
|---|---|---|---|---|---|---|---|
| **Témoin** | 1,9 | 12,50 | 10,28 | 7,82 | 28 | 3 | 3,38 |
| **F1 - 129 g/hl** | 2,1 | 12,57 | 9,69 | 7,24 | 28 | 3 | 3,37 |

Le traitement F1 à la dose de 129 g/hl engendre une diminution de 17,6% de la teneur en OTA du vin rouge. Le traitement F1 n'entraîne aucune modification des paramètres classiques d'analyses des vins. Les teneurs en composés phénoliques totaux (ca. 2400 mg/l), tanins (ca. 3.3 g/l) et anthocyanes (ca. 470 mg/l), et l'intensité colorante (DO280 nm = 0.57) sur des prélèvements effectués 2 jours et 1 semaine après traitement sont inchangés par rapport au témoin.

**Tableau 43-** Elimination des mycotoxines dans le vin rouge du vignoble D (cuve de 3 hl)

|  | OTA ($\mu$g/l) | Variation (%) |
|---|---|---|
| **Témoin** | 2,7 | - |
| **F1- 300 g/hl** | 2,2 | -18,5% |
| **F1 - 400 g/hl** | 2,1 | -22,2% |
| **F1- 500 g/hl** | 2,0 | -25,9% |

**Tableau 44-** Caractéristiques analytiques des vin rouges du vignoble D (cuve de 3 hl)

|  | Sucre (g/L) | TAV (%vol) | Ac.T (g/L $H_2SO_4$) | Ac.V (g/L $H_2SO_4$) | $SO_2T$ (mg/L) | $SO_2L$ (mg/L) | pH |
|---|---|---|---|---|---|---|---|
| **Témoin** | 1,5 | 13,66 | 3,47 | 0,59 | 25 | 2 | 3,55 |
| **F1 - 300 g/hl** | 1,4 | 13,63 | 3,42 | 0,59 | 30 | 3 | 3,55 |
| **F1 - 400 g/hl** | 1,5 | 13,51 | 4,78 | 2,30 | 34 | 2 | 3,52 |
| **F1 - 500 g/hl** | 1,4 | 13,33 | 6,61 | 4,19 | 34 | 2 | 3,43 |

L'élimination de l'OTA dans le vin rouge est dose dépendante. Les teneurs en composés phénoliques totaux (ca. 2070 mg/l), tanins (ca. 2.43 g/l) et intensité colorante (DO280 nm = 0.47) après traitement sont inchangés par rapport au témoin. Quelle que soit la dose de traitement F1 ajoutée au vin (300 g/hl, 400 g/hl, 500 g/hl) cela n'engendre pas de modifications des paramètres classiques d'analyses des vins.

**EXEMPLE 13- Elimination des mycotoxines dans les vins rouges naturellement contaminés, à petite échelle**

Un vin rouge du domaine M (bouteilles de 1 l) contenant des teneurs supérieure ou égale en OTA à la recommandation de l'ON ont été traités par ajout d'extrait fongique F1, à plusieurs doses et selon des conditions de température et de temps variables, en un ou deux ajouts. L'extrait fongique est laissé en contact avec le vin durant 3 jours. Le vin témoin ne subi aucun traitement.

Résultats :

Tableau 45- Caractéristiques analytiques des vins rouges du domaine M (bouteilles de 1 l)

| | Sucre (g/L) | TAV (%vol) | Ac.T (g/L $H_2SO_4$) | Ac.V (g/L $H_2SO_4$) | $SO_2T$ (mg/L) | $SO_2L$ (mg/L) | pH |
|---|---|---|---|---|---|---|---|
| **Témoin** | 1,1 | 12,97 | 5,36 | 2,60 | 13 | 2 | 3,69 |
| **F1 - 200 g/hl Température ambiante, 3 jours** | 1,2 | 13,09 | 3,65 | 0,56 | 6 | 2 | 3,73 |
| **F1 - 300 g/hl 0°C, 3 jours** | 1,1 | 13,14 | 3,64 | 0,55 | 6 | 2 | 3,73 |
| **F1 - 400 g/hl Température ambiante, 3 jours** | 1,3 | 13,03 | 3,61 | 0,54 | 7 | 2 | 3,74 |
| **F1 - 2 x 200 g/hl Température ambiante, 3 jours** | 1,3 | 13,05 | 3,59 | 0,57 | 5 | 2 | 3,76 |
| **F1 - 500 g/hl Température ambiante, 3 jours** | 1,1 | 13,10 | 3,59 | 0,55 | 6 | 2 | 3,74 |
| **F1 - 500 g/hl 0°C, 3 jours** | 1,0 | 13,11 | 3,59 | 0,56 | 7 | 2 | 3,75 |
| **F1 - 300 g/hl 10 jours** | 1,0 | 12,89 | 3,62 | 0,59 | 7 | 2 | 3,73 |

Tableau 46- Elimination des mycotoxines dans le vin rouge du domaine M (bouteilles de 1l)

| | OTA ($\mu$g/l) | Variation (%) |
|---|---|---|
| **Témoin** | 3,0 | |
| **F1 - 200 g/hl Température ambiante, 3 jours** | 2,3 | -23,3% |
| **F1 - 300 g/hl 0°C, 3 jours** | 2,0 | -33,3% |
| **F1- 400 g/hl Température ambiante, 3 jours** | 1,9 A | -36,7% |
| **F1 - 2 x 200 g/hl Température ambiante, 3 jours** | 1,8 | -40% |
| **F1 - 500 g/hl Témpérature ambiante, 3 jours** | 2,0 | -33,3% |

(suite)

|  | OTA ($\mu$g/l) | Variation (%) |
|---|---|---|
| **F1 - 500 g/hl**<br>**0°C, 3 jours** | 1,9 | -36,7% |
| **F1 - 300 g/hl**<br>**10 jours** | 2,0 | -33,3% |

L'élimination est au minimum de 23 % avec le traitement F1 à la dose de 200 g/hl. Les teneurs en composés phénoliques totaux (ca. 2432 mg/l), tanins (ca. 2.95 g/l), anthocyanes (ca. 415 mg/l) et intensité colorante (DO280 nm = 0.56) après traitement sont inchangés par rapport au témoin.

Le protocole de traitement le plus efficace est l'ajoût successif de 2 fois 200 g/hl de F1, qui permet de diminuer la teneur en OTA jusqu'à 1,8 $\mu$g/l. Le temps de contact de F1 (3 jours ou 10 jours) avec le vin n'a pas d'influence sur l'élimination du contaminant.

**EXEMPLE 14- Filtration d'une bière blanche en présence de chitine-glucan à une dose de 200 g/hl à l'échelle laboratoire**

Un lot de 10 litres de bière blanche est sélectionné pour être filtré sur bougie verticale en présence de chitine-glucan à une dose de 200 g/hl. Le chitine-glucan utilisé se présente sous forme d'une poudre de granulométrie allant de 50 à 90 $\mu$m.

Dans une première étape, on forme une pré-couche de chitine-glucan sur une bougie filtrante verticale d'ouverture 30 $\mu$m. La poudre de chitine-glucan est mise en suspension à 10% dans l'eau, et mélangée pendant 1 heure avant d'être déposée sur le filtre par circulation en circuit fermé à un débit de 20 hl.h$^{-1}$.m$^{-2}$.

Dans une deuxième étape, on réduit le débit de circulation à 8 hl.h$^{-1}$.m$^{-2}$, et on fait circuler un mélange eau/bière puis bière en circuit ouvert. La bière est préalablement mise en présence de chitine-glucan à une dose de 200, g/hl dans le bac à alluvionage. La bière est filtrée au débit de 7 à 8 hl.h$^{-1}$.m$^{-2}$ sur le gâteau de chitine-glucan jusqu'à ce que tout le volume soit filtré. La bière est ensuite placée au froid à 8°C, puis un prélèvement est effectué pour analyse de l'azote coagulable et des polyphénols totaux.

Résultats :

**Tableau 48-** Elimination des mycotoxines dans la bière

|  | Bière IN | Bière OUT | % éliminé par filtration sur chitine-glucan |
|---|---|---|---|
| Azote coagulable | 378 mg/L | 162 mg/L | 57% |
| Polyphénols totaux | 230 mg/L | 225 mg/L | 2% |

La poudre de chitine-glucan forme un gâteau peu compressible sur le support filtrant utilisé. La teneur en protéines, caractérisée par la teneur en azote coagulable, de la bière filtrée sur ce gâteau (OUT) est inférieure de 57% à la teneur en protéines de la bière témoin (IN). La teneur en polyphénols totaux est inchangée.

**Revendications**

1. Méthode de traitement d'un liquide alimentaire d'origine végétale comprenant la mise en contact d'un liquide alimentaire d'origine végétale avec au moins un auxiliaire de technologie, ledit auxiliaire de technologie étant un extrait fongique comprenant majoritairement au moins un polysaccharide non-ionique, ledit polysaccharide non-ionique comprenant majoritairement au moins un copolymère chitine-glucane.

2. Méthode, selon la revendication 1, **caractérisée en ce que** le polysaccharide non-ionique comprend majoritairement des unités N-acétyl-D-glucosamine (chitine) et D-glucose (beta-glucane).

3. Méthode, selon la revendication 1 ou 2, **caractérisée en ce que** le copolymère chitine-glucane présente un rapport chitine/glucane compris entre 95:5 et 5:95 (m/m).

4. Méthode, selon l'une quelconque des revendications 1 à 3, **caractérisée en ce que** le copolymère chitine-glucane présente un rapport chitine/glucane compris entre 70:30 et 20:80 (m/m).

5. Méthode, selon l'une quelconque des revendications 1 à 4, **caractérisée en ce que** le copolymère chitine-glucane comprend une quantité de chitine (poly(N-acétyl-D-glucosamine)) inférieure à 60% en masse par rapport à la masse totale du copolymère.

6. Méthode, selon l'une quelconque des revendications 1 à 5, **caractérisée en ce que** le copolymère chitine-glucane comprend une quantité de chitine (poly(N-acétyl-D-glucosamine)) comprise entre 20 et 50 % en masse par rapport à la masse totale du copolymère.

7. Méthode, selon l'une quelconque des revendications 1 à 3, **caractérisée en ce que** le copolymère chitine-glucane comprend une quantité de glucane (poly(D-glucose)) inférieure à 30 % en masse par rapport à la masse totale du copolymère.

8. Méthode, selon l'une quelconque des revendications 1 à 3, **caractérisée en ce que** le copolymère chitine-glucane comprend une quantité de glucane (poly(D-glucose)) de préférence inférieure à 25 % par rapport à la masse totale du copolymère.

9. Méthode, selon l'une quelconque des revendications précédentes, pour l'élimination partielle ou complète de composés indésirables, causes d'instabilité ou de risques sanitaires.

10. Méthode, selon la revendication 9, **caractérisée en ce que** les composés indésirables sont choisis parmi le groupe consistant des colloïdes causant l'instabilité, des colloïdes causant le trouble, colloïdes procurant des propriété organoleptiques de mauvaise qualité, des protéines, des métaux, des métaux lourds, en particulier le fer, le cadmium et le plomb, des pesticides résiduels comme les fongicides, les insecticides, et les herbicides, et des toxines comme les mycotoxines et les endotoxines bactériennes, et que leur élimination a pour but d'améliorer la qualité de liquide alimentaire.

11. Méthode, selon l'une quelconque des revendications 1 à 8, pour le traitement de liquides alimentaires finis.

12. Méthode, selon l'une quelconque des revendications 1 à 8, pour la clarification d'un liquide alimentaire d'origine végétale.

13. Méthode, selon l'une quelconque des revendications 1 à 12, **caractérisée en ce que** le liquide alimentaire d'origine végétale est choisi parmi une boisson fermentée et un jus de fruit.

14. Méthode, selon la revendication 13, **caractérisée en ce que** la boisson fermentée est un vin.

15. Méthode, selon la revendication 13, **caractérisée en ce que** la boisson fermentée est une bière.

**Patentansprüche**

1. Verfahren zur Behandlung einer Ernährungsflüssigkeit pflanzlichen Ursprungs, umfassend das In-Kontakt-Bringen einer Ernährungsflüssigkeit pflanzlichen Ursprungs mit mindestens einem Technologiemittel, wobei das Technologiemittel ein Pilzextrakt ist, der hauptsächlich mindestens ein nichtionisches Polysaccharid umfasst, wobei das nichtionische Polysaccharid hauptsächlich mindestens ein Chitin-Glucan Copolymer enthält.

2. Verfahren nach Anspruch 1, **dadurch gekennzeichnet, dass** das nichtionische Polysaccharid hauptsächlich N-Acetyl-D-Glucosamin (Chitin)- und D-Glucose (Beta-Glucan)-Einheiten enthält.

3. Verfahren nach Anspruch 1 oder 2, **dadurch gekennzeichnet, dass** das Chitin-Glucan Copolymer ein Verhältnis Chitin/Glucan zwischen 95:5 und 5:95 (m/m) aufweist.

4. Verfahren nach einem beliebigen der Ansprüche 1 bis 3, **dadurch gekennzeichnet, dass** das Chitin-Glucan Copolymer ein Verhältnis Chitin/Glucan zwischen 70:30 und 20:80 (m/m) aufweist.

5. Verfahren nach einem beliebigen der Ansprüche 1 bis 4, **dadurch gekennzeichnet, dass** das Chitin-Glucan Copolymer eine Menge an Chitin (poly(N-Acetyl-D-glucosamin)) weniger als 60 Massen% in Bezug auf die Gesamtmasse des Copolymers enthält.

6. Verfahren nach einem beliebigen der Ansprüche 1 bis 5, **dadurch gekennzeichnet, dass** das Chitin-Glucan Copolymer eine Menge an Chitin (poly(N-Acetyl-D-glucosamin)) zwischen 20 und 50 Massen% in Bezug auf die Gesamtmasse des Copolymers enthält.

7. Verfahren nach einem beliebigen der Ansprüche 1 bis 3, **dadurch gekennzeichnet, dass** das Chitin-Glucan Copolymer eine Menge an Glucan (poly(D-Glucose)) kleiner als 30 Massen% in Bezug auf die Gesamtmasse des Copolymers enthält.

8. Verfahren nach einem beliebigen der Ansprüche 1 bis 3, **dadurch gekennzeichnet, dass** das Chitin-Glucan Copolymer eine Menge an Glucan (poly(D-GlucoSe)) vorzugsweise kleiner als 25 Massen% in Bezug auf die Gesamtmasse des Copolymers enthält.

9. Verfahren nach einem beliebigen der vorhergehenden Ansprüche, für die partielle oder vollständige Eliminierung von unerwünschten Verbindungen, die Ursachen von Instabilitäten oder Ernährungsrisiken sind.

10. Verfahren nach Anspruch 9, **dadurch gekennzeichnet, dass** die unerwünschten Verbindungen ausgewählt sind aus der Gruppe, die besteht aus Kolloiden, die eine Instabilität bewirken, Kolloiden, die die Trübung bewirken, Kolloiden, die organoleptische Eigenschaften von schlechter Qualität liefern, aus Proteinen, Metallen, Schwermetallen, insbesondere Eisen, Kadmium und Blei, aus Restpestiziden, wie Fungiziden, Insektiziden und Herbiziden und aus Toxinen, wie Mycotoxinen und Bakterienendotoxinen, und dass ihre Eliminierung die Verbesserung der Ernährungsflüssigkeit zum Ziel hat.

11. Verfahren nach einem beliebigen der Ansprüche 1 bis 8 für die Behandlung von fertigen Ernährungsflüssigkeiten.

12. Verfahren nach einem beliebigen der Ansprüche 1 bis 8 für die Klärung einer Ernährungsflüssigkeit pflanzlichen Ursprungs.

13. Verfahren nach einem beliebigen der Ansprüche 1 bis 12, **dadurch gekennzeichnet, dass** die Ernährungsflüssigkeit pflanzlichen Ursprungs ausgewählt ist aus einem fermentierten Getränk oder einem Fruchtsaft.

14. Verfahren nach Anspruch 13, **dadurch gekennzeichnet, dass** das fermentierte Getränk ein Wein ist.

15. Verfahren nach Anspruch 13, **dadurch gekennzeichnet, dass** das fermentierte Getränk ein Bier ist.

**Claims**

1. Method for treating a food-grade liquid of vegetable origin, comprising putting in contact a food-grade liquid of vegetable origin with at least one technological additive, said technological additive being a fungal extract, comprising mainly at least one non-ionic polysaccharide, said non-ionic polysaccharide comprising mainly at least one chitin-glucan copolymer.

2. Method according to claim 1, **characterised in that** the non-ionic polysaccharide comprises mainly N-acetyl-D-glucosamine (chitin) and D-glucose (beta-glucan) units.

3. Method according to claim 1 or 2, **characterised in that** the chitin-glucan copolymer has a chitin/glucan ratio between 95 : 5 and 5 : 95 (m/m).

4. Method according to any of the claims 1 to 3, **characterised in that** the chitin-glucan copolymer has a chitin/glucan ratio between 70 : 30 and 20 : 80 (m/m).

5. Method according to any of the claims 1 to 4, **characterised in that** the chitin-glucan copolymer comprises a quantity of chitin (poly(N-acetyl-D-glucosamine)) which is less than 60% by mass relative to the total mass of the copolymer.

6.   Method according to any of the claims 1 to 5, **characterised in that** the chitin-glucan copolymer comprises a quantity of chitin (poly(N-acetyl-D-glucosamine)) between 20 and 50% by mass relative to the total mass of the copolymer.

7.   Method according to any of the claims 1 to 3, **characterised in that** the chitin-glucan copolymer comprises a quantity of glucan (poly(D-glucose)) which is less than 30% by mass relative to the total mass of the copolymer.

8.   Method according to any of the claims 1 to 3, **characterised in that** the chitin-glucan copolymer comprises a quantity of glucan (poly(D-glucose)) which is preferably less than 25% relative to the total mass of the copolymer.

9.   Method according to any of the preceding claims for partial or complete elimination of undesirable compounds, which cause instability or sanitary risks.

10.  Method according to claim 9, **characterised in that** the undesirable compounds are chosen from the group consisting of colloids which cause instability, colloids which cause turbidity, colloids which provide poor quality organoleptic properties, proteins, metals, heavy metals, in particular iron, cadmium and lead, residual pesticides such as fungicides, insecticides and herbicides, and toxins such as mycotoxins and bacterial endotoxins, and **in that** elimination thereof has the aim of improving the quality of the food-grade liquid.

11.  Method according to any of the claims 1 to 8 for the treatment of finished food-grade liquids.

12.  Method according to any of the claims 1 to 8 for the clarification of a food-grade liquid of vegetable origin.

13.  Method according to any of the claims 1 to 12, **characterised in that** the food-grade liquid of vegetable origin is chosen from a fermented drink and a fruit juice.

14.  Method according to claim 13, **characterised in that** the fermented drink is a wine.

15.  Method according to claim 13, **characterised in that** the fermented drink is a beer.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2599048
- EP 0501381 A
- WO 9817386 A
- DE 19810094
- US 6402953 B
- WO 03068824 A

**Littérature non-brevet citée dans la description**

- **SPAGNA GIOVANNI et al.** the stabilization of white wines by absorption of phenolic compounds on chitin and chitosan. *Food research International, Applied Science, Barking,* 1996, vol. 29 (3-4), 241-248
- **BRADFORD MM.** *Anal. Biochem.,* 1976, vol. 72, 248-254
- **SINGLETON VL ; DRAPPER DE.** The transfer of phenolic compounds from grapes seeds into wine. *J. Enol. Vitic.,* 1964, vol. 15, 131-145
- **RIBÉREAU-GAYON P ; GLORIES Y ; MAUJEAN A ; DUBOURDIEU D.** Etude de la couleur du vis. *Traité d'oenologie 2. chimie du vin stabilisation et traitement,* 1998, 206-207
- Détermination de la teneur en minéraux des différents essais. *la méthode officielle de l'OIV : Recueil des méthodes internationales d'analyses du vin et des moûts,* 217-224227-228231-234
- **A. VISCONTI ; M. PASCALE ; G. CENTONZE.** Determination of ochratoxin A in wine by means of immunoaffinity column clean-up and high-performance liquid chromatogra y. *Journal of Chromatogra y A,* 1999, vol. 864, 89-101